# EUROPEAN PATENT SPECIFICATION

(11) **EP 3 091 785 B1**
(45) Date of publication and mention of the grant of the patent: **21.03.2018**
(21) Application number: 14904651.8
(22) Date of filing: 28.10.2014
(51) Int. Cl.: H04W 36/24

(54) **NETWORK SELECTION METHOD AND USER EQUIPMENT**
NETZWERKAUSWAHLVERFAHREN UND BENUTZERVORRICHTUNG
PROCÉDÉ DE SÉLECTION DE RÉSEAU ET ÉQUIPEMENT D'UTILISATEUR

(43) Date of publication of application: 09.11.2016
(73) Proprietor: Huawei Technologies Co., Ltd., Longgang District Shenzhen, Guangdong 518129 (CN)
(72) Inventor: DUAN, Xiaoyan, Shenzhen Guangdong 518129 (CN); ZHANG, Bo, Shenzhen Guangdong 518129 (CN); JIN, Hui, Shenzhen Guangdong 518129 (CN)
(74) Representative: Epping - Hermann - Fischer
(86) International application number: PCT/CN2014/089700
(87) International publication number: WO 2016/065535

(56) References cited:
- WO-A1-2013/020000
- WO-A1-2014/101349
- WO-A1-2014/165475
- CN-A- 103 906 158
- US-A1- 2013 034 080
- US-A1- 2014 087 723

## Description

### TECHNICAL FIELD

The present invention relates to the communications field, and in particular, to a network selection method and user equipment.

### BACKGROUND

Circuit switched fallback (CS Fallback, CSFB for short) is a solution to providing a voice service and another circuit switched (Circuit Switched, CS for short) service (such as a CS video, a positioning service, or a supplementary service) in the Long Term Evolution mobile communications access technology (an access technology used in a fourth generation mobile communications system) (Long Term Evolution, LTE for short), and refers to that: user equipment (User Equipment, UE for short) camps on an LTE network, and goes to a second generation mobile communications system (2nd Generation, 2G for short)/third generation mobile communications system (3rd Generation, 3G for short) CS network when the user equipment needs to initiate or respond to a voice call or another CS service, to execute a voice service or the another CS service; after completing execution of the voice service or the another CS service on the 2G/3G CS network, the UE returns to the LTE network according to information that is provided by the network and used for redirecting to the LTE network, or autonomously returns to the LTE network.

WO 2014/101349 A1 discloses systems and methods for generating a LTE network return procedure. A mobile terminal may generate, in absence of redirection instruction from a circuit-switched network, a LTE network return procedure that when instantiated by the mobile terminal implements connection of the mobile terminal to a LTE network based on a ranking of measured Long Term Evolution network access points. The disclosed terminal and method may be used when providing voice services via alternate methods such as CSFB.

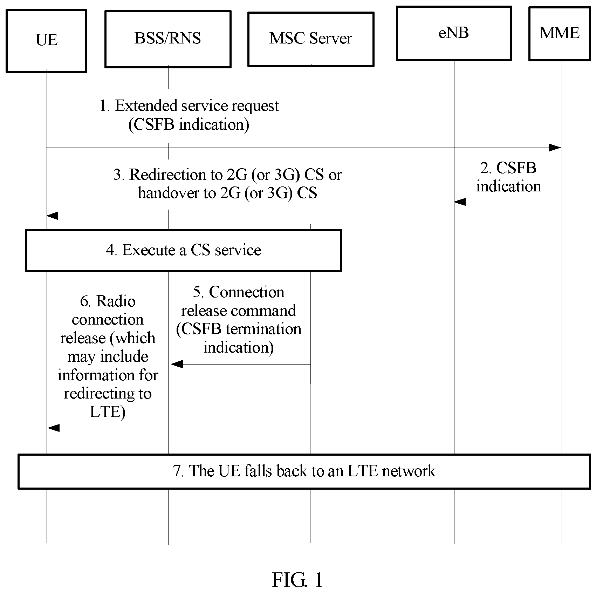

FIG. 1 is a signaling flowchart of a CSFB service. Main steps of the CSFB service include:
1. UE sends an extended service request (Extended Service Request) to a mobility management entity (Mobility Management Entity, MME for short), where the extended service request carries a CSFB indication, which is used to request to fall back to a 2G (or 3G) CS domain to establish a voice call.
2. The MME sends an evolved Node B (Evolved Node B, or E-UTRAN Node B, eNB for short) a UE context modification request (UE Context Modification Request) that carries a CSFB indication or a UE initial context request message (Initial UE Context Request) that carries a CSFB indication.
3. The eNB sends the UE a message for redirecting to the 2G (or 3G) CS domain or a message for handing over to the 2G (or 3G) CS domain.
4. The UE accesses a 2G (or 3G) network to execute a CS service.
5. After the CS service is completed, an MSC Server sends a connection release command to a base station subsystem (Base Station Subsystem, BSS for short) (or a radio network subsystem (Radio Network Subsystem, RNS for short)), where the connection release command may carry a CSFB indication, which is used to instruct the BSS (or RNS) to make the UE return to an LTE network.
6. The BSS (or RNS) sends the UE a radio connection release message Channel Release (or RRC Connection Release), where the release message may carry information for redirecting to the LTE network, for example, an LTE frequency (that is, frequency, Frequency), which is used to instruct the UE to return to the LTE network.
7. The UE selects an LTE cell according to the redirection information in the radio connection release message or autonomously selects an LTE cell (that is, not based on the redirection information delivered by the network), and returns to the LTE network.

However, in an actual application process, when UE returns to an LTE network according to redirection information or autonomously after the UE completes execution of a CS voice service or another CS service on a 2G/3G CS network, a data service may be interrupted for a long time, and it takes a relatively long time for the UE to resume a normal registration state on the LTE network.

### SUMMARY

Embodiments of the present invention provide a network selection method and user equipment, which are used to resolve a problem that a data service is interrupted when UE that camps on an LTE network falls back to a 2G/3G CS network to execute a CS service and returns to the LTE network, to improve speed at which the UE resumes a normal registration state on the LTE network.

A first aspect of the embodiments of the present invention provides a network selection method, including:
falling, by user equipment, from a first Long Term Evolution LTE cell back to a second generation mobile communications system 2G network or a third generation mobile communications system 3G network to execute a circuit switched CS service, where a network type of the first LTE cell is a first type, and the first type is LTE frequency division duplex FDD or LTE time division duplex TDD;
when the user equipment completes execution of the CS service on the 2G or 3G network, measuring, by the user equipment, an LTE cell according to LTE network information, to obtain a measurement result of each LTE cell of at least the first type, where, at an edge or in an overlapped coverage area of an LTE TDD network and an LTE FDD network, the LTE network information includes information about a cell of an LTE FDD type and information about a cell of an LTE TDD type; and
selecting, by the user equipment from an LTE cell whose measurement result meets a preset condition, a second LTE cell for accessing an LTE network, where a network type of the second LTE cell is the first type;
wherein, in the step of measuring or selecting, a network type of LTE cells to be measured or LTE cells whose measurement result meets a preset condition is determined, respectively.

With reference to the first aspect of the embodiments of the present invention, in a first implementation manner of the first aspect of the embodiments of the present invention, the LTE network information is LTE network information provided by an access network device on the 2G or 3G network, or LTE network information stored in the user equipment, or all LTE frequencies supported by the user equipment.

With reference to the first aspect of the embodiments of the present invention or the first implementation manner of the first aspect, in a second implementation manner of the first aspect of the embodiments of the present invention, the measuring, by the user equipment, an LTE cell according to LTE network information includes:
measuring, by the user equipment, only an LTE cell of the first type according to the LTE network information; and
the selecting, by the user equipment from an LTE cell whose measurement result meets a preset condition, a second LTE cell for accessing an LTE network includes:
   selecting, by the user equipment from an LTE cell that is of the first type and whose measurement result meets the preset condition, the second LTE cell for accessing the LTE network.

With reference to the second implementation manner of the first aspect of the embodiments of the present invention, in a third implementation manner of the first aspect of the embodiments of the present invention, the measuring, by the user equipment, only an LTE cell of the first type according to the LTE network information includes:
determining, by the user equipment, a frequency belonging to a frequency band of the first type in the LTE network information, searching for only the frequency belonging to the frequency band of the first type, and continuing to measure a found LTE cell; and/or
determining, by the user equipment according to the stored LTE network information, a frequency and/or a cell identity that are/is in the LTE network information and that are/is corresponding to the LTE cell of the first type, searching for only the frequency and/or the cell identity that are/is corresponding to the LTE cell of the first type, and continuing to measure a found LTE cell, where the stored LTE network information includes a network type of an LTE cell that is corresponding to a frequency and/or a cell identity; and/or
determining, by the user equipment according to LTE FDD or LTE TDD indication information delivered by the 2G or 3G network, a frequency and/or a cell identity that are/is corresponding to the LTE cell of the first type, searching for only the frequency and/or the cell identity that are/is corresponding to the LTE cell of the first type, and continuing to measure a found LTE cell.

With reference to the second implementation manner of the first aspect of the embodiments of the present invention, in a fourth implementation manner of the first aspect of the embodiments of the present invention, the measuring, by the user equipment, only an LTE cell of the first type according to the LTE network information includes:
searching, by the user equipment, for an LTE cell according to the LTE network information;
determining, by the user equipment, a network type of each found LTE cell according to locations/a location of a primary synchronization signal and/or secondary synchronization signal in a frame of the LTE cell, and continuing to measure only an LTE cell whose network type is the first type; and/or
determining, by the user equipment, a network type of each found LTE cell according to whether an uplink frequency and a downlink frequency of the LTE cell are the same, and continuing to measure only an LTE cell whose network type is the first type.

With reference to the first aspect of the embodiments of the present invention or the first implementation manner of the first aspect, in a fifth implementation manner of the first aspect of the embodiments of the present invention, the measuring, by the user equipment, an LTE cell according to LTE network information includes:
measuring, by the user equipment, an LTE FDD cell and an LTE TDD cell according to the LTE network information; and
the selecting, by the user equipment from an LTE cell whose measurement result meets a preset condition, a second LTE cell for accessing an LTE network includes:
   determining, by the user equipment, a network type of each LTE cell in the LTE cell whose measurement result meets the preset condition; and
   selecting, by the user equipment from an LTE cell whose network type is the first type in the LTE cell whose measurement result meets the preset condition, the second LTE cell for accessing the LTE network.

With reference to the fifth implementation manner of the first aspect of the embodiments of the present invention, in a sixth implementation manner of the first aspect of the embodiments of the present invention, the determining, by the user equipment, a network type of each LTE cell in the LTE cell whose measurement result meets the preset condition:
determining, by the user equipment according to whether a frequency of each LTE cell belongs to an LTE FDD frequency band or an LTE TDD frequency band, the network type of each LTE cell in the LTE cell whose measurement result meets the preset condition; and/or
determining, by the user equipment according to locations/a location of a primary synchronization signal PSS and/or secondary synchronization signal in a frame of each LTE cell, the network type of each LTE cell in the LTE cell whose measurement result meets the preset condition; and/or
determining, by the user equipment according to the stored LTE network information, the network type of each LTE cell in the LTE cell whose measurement result meets the preset condition, where the stored LTE network information includes a network type of an LTE cell; and/or
determining, by the user equipment according to LTE FDD and/or LTE TDD indication information delivered by the 2G or 3G network, the network type of each LTE cell in the LTE cell whose measurement result meets the preset condition; and/or
determining, by the user equipment according to whether an uplink frequency and a downlink frequency of each LTE cell are the same, the network type of each LTE cell in the LTE cell whose measurement result meets the preset condition.

A second aspect of the embodiments of the present invention provides user equipment, including:
a fallback module, configured to fall from an LTE cell back to a 2G or 3G network to execute a circuit switched CS service, where a network type of the first LTE cell is a first type, and the first type is LTE FDD or LTE TDD;
a measurement module, configured to: when the user equipment completes execution of the CS service on the 2G or 3G network, measure an LTE cell according to LTE network information, to obtain a measurement result of each LTE cell of at least the first type, where, at an edge or in an overlapped coverage area of an LTE TDD network and an LTE FDD network, the LTE network information includes information about a cell of an LTE FDD type and information about a cell of an LTE TDD type; and
a selection module, configured to select, from an LTE cell whose measurement result meets a preset condition, a second LTE cell for accessing an LTE network, where a network type of the second LTE cell is the first type:
   wherein the measurement module or the selection module is further configured to determine a network type of LTE cells to be measured or LTE cells whose measurement result meets a preset condition, respectively.

With reference to the second aspect of the embodiments of the present invention, in a first implementation manner of the second aspect of the embodiments of the present invention, the measurement module is specifically configured to: when the user equipment completes execution of the CS service on the 2G or 3G network, measure only an LTE cell of the first type according to the LTE network information, to obtain a measurement result of each LTE cell, where the LTE network information includes the information about a cell of an LTE FDD type and the information about a cell of an LTE TDD type; and
the selection module is specifically configured to select, from an LTE cell that is of the first type and whose measurement result meets the preset condition, the second LTE cell for accessing the LTE network, where the network type of the second LTE cell is the first type. With reference to the first implementation manner of the second aspect of the embodiments of the present invention, in a second implementation manner of the second aspect of the embodiments of the present invention, the measurement module specifically includes:
a first search unit, configured to: when the user equipment completes execution of the CS service on the 2G or 3G network, determine a frequency belonging to a frequency band of the first type in the LTE network information, and search for only the frequency belonging to the frequency band of the first type; and/or determine, according to stored LTE network information, a frequency and/or a cell identity that are/is in the LTE network information and that are/is corresponding to the LTE cell of the first type, and search for only the frequency and/or the cell identity that are/is corresponding to the LTE cell of the first type; and/or determine, according to LTE FDD or LTE TDD indication information delivered by the 2G or 3G network, a frequency and/or a cell identity that are/is corresponding to the LTE cell of the first type, and search for only the frequency and/or the cell identity that are/is corresponding to the LTE cell of the first type; and
a first measurement unit, configured to continue to measure an LTE cell found by the first search unit, to obtain the measurement result of each LTE cell.

With reference to the second implementation manner of the second aspect of the embodiments of the present invention, in a third implementation manner of the second aspect of the embodiments of the present invention, the measurement module specifically includes:
a second search unit, configured to search for an LTE cell according to the LTE network information; and
a second measurement unit, configured to: determine a network type of each found LTE cell according to locations/a location of a primary synchronization signal and/or secondary synchronization signal in a frame of the LTE cell found by the second search unit, and/or according to whether an uplink frequency and a downlink frequency of each LTE cell found by the second search unit are the same; and continue to measure only an LTE cell whose network type is the first type.

With reference to the second implementation manner of the second aspect of the embodiments of the present invention, in a fourth implementation manner of the second aspect of the embodiments of the present invention, the measurement module is specifically configured to: when the user equipment completes execution of the CS service on the 2G or 3G network, measure an LTE FDD cell and an LTE TDD cell according to the LTE network information, to obtain a measurement result of each LTE cell, where the LTE network information includes the information about a cell of an LTE FDD type and the information about a cell of an LTE TDD type; and
the selection module specifically includes:
   a determining unit, configured to determine a network type of each LTE cell in the LTE cell whose measurement result meets the preset condition; and
   a selection unit, configured to select, from an LTE cell whose network type is the first type in the LTE cell whose measurement result meets the preset condition, the second LTE cell for accessing the LTE network.

With reference to the fourth implementation manner of the second aspect of the embodiments of the present invention, in a fifth implementation manner of the second aspect of the embodiments of the present invention, the determining unit is specifically configured to: determine a network type of each LTE cell in the LTE cell whose measurement result meets the preset condition, according to whether a frequency of each LTE cell belongs to an LTE FDD frequency band or an LTE TDD frequency band, and/or according to locations/a location of a primary synchronization signal PSS and/or secondary synchronization signal in a frame of each LTE cell, and/or according to stored LTE network information, and/or according to LTE FDD and/or LTE TDD indication information delivered by the 2G or 3G network, and/or according to whether an uplink frequency and a downlink frequency of each LTE cell are the same, where the stored LTE network information includes a network type of an LTE cell.

It can be seen from the foregoing technical solutions that the embodiments of the present invention have the following advantages: In the embodiments of the present invention, for UE that is at an edge or in an overlapped coverage area of an LTE TDD network and an LTE FDD network and falls back to a 2G/3G network to execute a CS service, LTE network information based on which the UE measures an LTE network after the UE completes execution of a CS service includes both information about a cell of an LTE FDD type and information about a cell of an LTE TDD type. After measuring an LTE cell according to the LTE network information, to obtain a measurement result of each LTE cell, the UE selects, from an LTE cell whose measurement result meets a preset condition, a second LTE cell whose network type is a first type (same as a network type of an LTE cell in which the UE is located before the fallback to the 2G/3G network to execute the CS service). This prevents a problem that a data bearer cannot be restored, which is caused because a network type of a returned-to LTE network is different from the network type before the fallback. In this way, the data bearer can be immediately restored, and the UE can resume a normal registration state on the LTE network without initiating an Attach process multiple times, thereby reducing time required for the UE to resume a normal registration state on the LTE network.

### BRIEF DESCRIPTION OF DRAWINGS

FIG. 1 is a schematic signaling flowchart of a circuit switched fallback service according to an embodiment of the present invention;
FIG. 2 is a schematic flowchart of a network selection method according to an embodiment of the present invention;
FIG. 3 is another schematic flowchart of a network selection method according to an embodiment of the present invention;
obtain a measurement result of each LTE cell, where the LTE network information includes information about a cell of an LTE FDD type and information about a cell of an LTE TDD type; and
selecting, from an LTE cell whose measurement result meets a preset condition, a second LTE cell for accessing an LTE network, where a network type of the second LTE cell is the first type.

With reference to the third aspect of the embodiments of the present invention, in a first implementation manner of the third aspect of the embodiments of the present invention, the processor is specifically configured to execute the following steps:
when the user equipment completes execution of the CS service on the 2G or 3G network, measuring only an LTE cell of the first type according to the LTE network information, to obtain a measurement result of each LTE cell, where the LTE network information includes the information about a cell of an LTE FDD type and the information about a cell of an LTE TDD type; and
selecting, from an LTE cell that is of the first type and whose measurement result meets the preset condition, the second LTE cell for accessing the LTE network, where the network type of the second LTE cell is the first type.

With reference to the first implementation manner of the third aspect of the embodiments of the present invention, in a second implementation manner of the third aspect of the embodiments of the present invention, the processor is specifically configured to execute the following steps:
when the user equipment completes execution of the CS service on the 2G or 3G network, determining a frequency belonging to a frequency band of the first type in the LTE network information, and searching for only the frequency belonging to the frequency band of the first type; and/or determining, according to stored LTE network information, a frequency and/or a cell identity that are/is in the LTE network information and that are/is corresponding to the LTE cell of the first type, and searching for only the frequency and/or the cell identity that are/is corresponding to the LTE cell of the first type; and/or determining, according to LTE FDD or LTE TDD indication information delivered by the 2G or 3G network, a frequency and/or a cell identity that are/is corresponding to the LTE cell of the first type, and searching for only the frequency and/or the cell identity that are/is corresponding to the LTE cell of the first type; and
continuing to measure a found LTE cell, to obtain the measurement result of each LTE cell.

With reference to the first implementation manner of the third aspect of the embodiments of the present invention, in a third implementation manner of the third aspect of the embodiments of the present invention, the processor is specifically configured to execute the following steps:
searching for an LTE cell according to the LTE network information; and
determining a network type of each found LTE cell according to locations/a location of a primary synchronization signal and/or secondary synchronization signal in a frame of each found LTE cell, and/or according to whether an uplink frequency and a downlink frequency of each found LTE cell are the same; and continuing to measure only an LTE cell whose network type is the first type.

With reference to the third aspect of the embodiments of the present invention, in a fourth implementation manner of the third aspect of the embodiments of the present invention, the processor is specifically configured to execute the following steps:
when the user equipment completes execution of the CS service on the 2G or 3G network, measuring an LTE FDD cell and an LTE TDD cell according to the LTE network information, to obtain a measurement result of each LTE cell, where the LTE network information includes the information about a cell of an LTE FDD type and the information about a cell of an LTE TDD type;
determining a network type of each LTE cell in the LTE cell whose measurement result meets the preset condition; and
selecting, from an LTE cell whose network type is the first type in the LTE cell whose measurement result meets the preset condition, the second LTE cell for accessing the LTE network.

With reference to the fourth implementation manner of the third aspect of the embodiments of the present invention, in a fifth implementation manner of the third aspect of the embodiments of the present invention, the processor is specifically configured to execute the following step:
determining a network type of each LTE cell in the LTE cell whose measurement result meets the preset condition, according to whether a frequency of each LTE cell belongs to an LTE FDD frequency band or an LTE TDD frequency band, and/or according to locations/a location of a primary synchronization signal PSS and/or secondary synchronization signal in a frame of each LTE cell, and/or according to stored LTE network information, and/or according to LTE FDD and/or LTE TDD indication information delivered by the 2G or 3G network, and/or according to whether an uplink frequency and a downlink frequency of each LTE cell are the same, where the stored LTE network information includes a network type of an LTE cell.

It can be seen from the foregoing technical solutions that the embodiments of the present invention have the following advantages: In the embodiments of the present invention, for UE that is at an edge or in an overlapped coverage area of an LTE TDD network and an LTE FDD network and falls back to a 2G/3G network to execute a CS service, LTE network information based on which the UE measures an LTE network after the UE completes execution of a CS service includes both information about a cell of an LTE FDD type and information about a cell of an LTE TDD type. After measuring an LTE cell according to the LTE network information, to obtain a measurement result of each LTE cell, the UE selects, from an LTE cell whose measurement result meets a preset condition, a second LTE cell whose network type is a first type (same as a network type of an LTE cell in which the UE is located before the fallback to the 2G/3G network to execute the CS service). This prevents a problem that a data bearer cannot be restored, which is caused because a network type of a returned-to LTE network is different from the network type before the fallback. In this way, the data bearer can be immediately restored, and the UE can resume a normal registration state on the LTE network without initiating an Attach process multiple times, thereby reducing time required for the UE to resume a normal registration state on the LTE network.

### BRIEF DESCRIPTION OF DRAWINGS

FIG. 1 is a schematic signaling flowchart of a circuit switched fallback service according to an embodiment of the present invention;

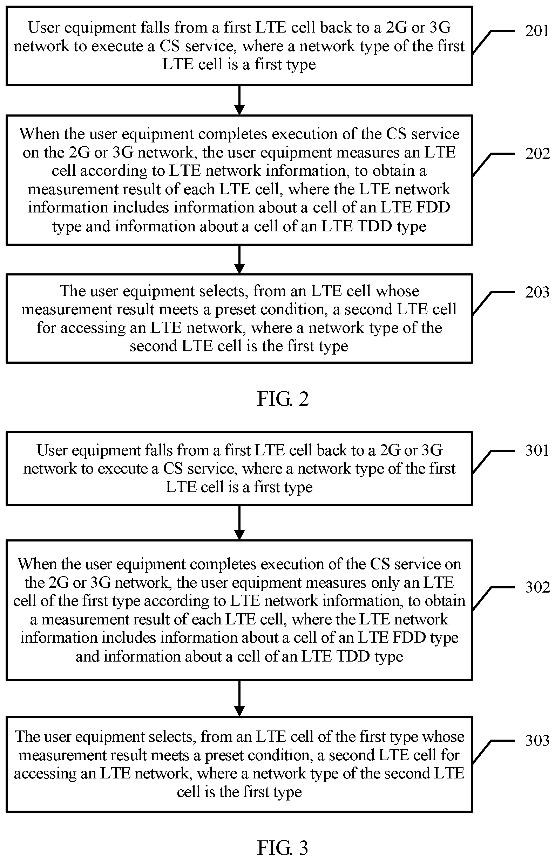

FIG. 2 is a schematic flowchart of a network selection method according to an embodiment of the present invention;
FIG. 3 is another schematic flowchart of a network selection method according to an embodiment of the present invention;

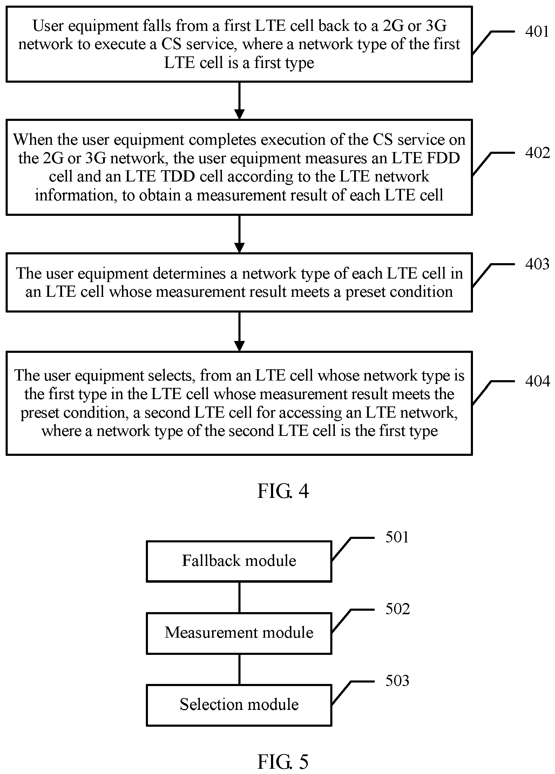

FIG. 4 is another schematic flowchart of a network selection method according to an embodiment of the present invention;
FIG. 5 is a schematic structural diagram of user equipment according to an embodiment of the present invention;

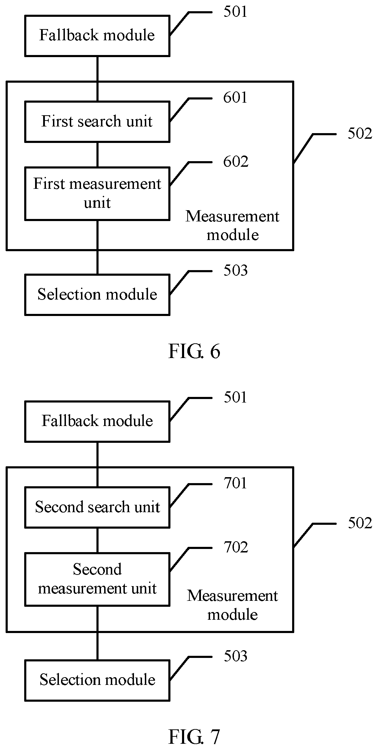

FIG. 6 is another schematic structural diagram of user equipment according to an embodiment of the present invention;
FIG. 7 is another schematic structural diagram of user equipment according to an embodiment of the present invention;

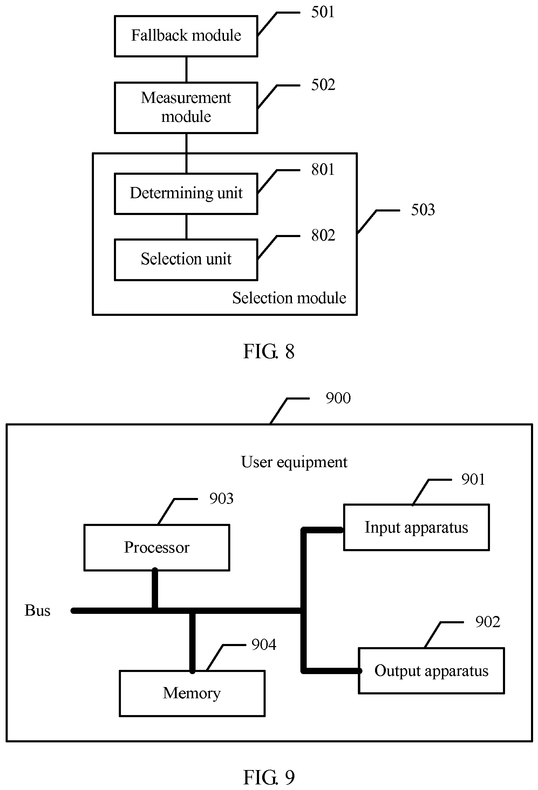

FIG. 8 is another schematic structural diagram of user equipment according to an embodiment of the present invention; and
FIG. 9 is another schematic structural diagram of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

Terms used to describe the present invention are used for the purpose of describing specific embodiments and are not intended to be used as limitation to the present invention.

The term "measuring an LTE cell" represents that UE measures reference signal received power RSRP (Reference Signal Received Power) and reference signal received quality RSRQ (Reference Signal Received Quality) of the LTE cell. It can be understood that, at an early stage of the measurement, the UE first searches for a cell, that is, searches a frequency and/or a cell identity to obtain an LTE cell, and then measures a reference signal of a found LTE cell, which specifically includes the following: the UE scans for a frequency that may be used by a cell, and then receives a primary synchronization signal (Primary Synchronization Signal, PSS for short) and a (Secondary Synchronization Signal, SSS for short) at a frequency obtained through scanning, to obtain timeslot and frame synchronization and a physical cell ID (Physical Cell ID, PCI for short). A location of the reference signal of the cell can be learned after the PCI is obtained, and precise timeslot and frequency synchronization can be obtained by demodulating the reference signal. In this way, cell broadcast information can be received, a cell search process is completed, and the reference signal of the cell can be measured.

The term "information about a cell of an LTE FDD type" is used to represent related information about an LTE cell whose network type is LTE FDD, where the information may include an LTE FDD frequency and/or an LTE FDD cell identity, and may further include other information, which is not limited herein. The LTE FDD frequency represents a frequency corresponding to an LTE cell whose network type is LTE FDD, and the LTE FDD cell represents a cell whose network type is LTE FDD.

The term "information about a cell of an LTE TDD type" is used to represent related information about an LTE cell whose network type is LTE TDD, where the information may include an LTE TDD frequency and/or an LTE TDD cell identity, and may further include other information, which is not limited herein. The LTE TDD frequency represents a frequency corresponding to an LTE cell whose network type is LTE TDD, and the LTE TDD cell represents a cell whose network type is LTE TDD.

In the prior art, there are two types of LTE networks: LTE time division duplex (Time-Division Duplex, TDD) and LTE frequency division duplex (Frequency-Division Duplex, FDD). At an edge or in an overlapped coverage area of an LTE TDD network and an LTE FDD network, redirection information in a radio connection release message delivered by a 2G/3G CS network may include information about both the LTE TDD network and the LTE FDD network; UE may also autonomously find cells of both an LTE TDD network and an LTE FDD network.

However, when the UE returns to an LTE network according to the redirection information or autonomously after completing execution of a CS voice service or another CS service on the 2G/3G CS network, the UE may return to an LTE cell of a different type than an LTE cell before fallback. Consequently, a data service cannot be restored for a long time or may even be interrupted, and it requires a relatively long time for the LTE network to resume a normal registration state.

The following describes a network selection method in the embodiments of the present invention. Referring to FIG. 2, an embodiment of a network selection method in the embodiments of the present invention includes the following steps:
201. User equipment falls from a first LTE cell back to a 2G or 3G network to execute a CS service, where a network type of the first LTE cell is a first type.

After the UE receives a message for redirecting to or handing over to a 2G (or 3G) CS domain sent by an eNB, the UE falls from the first LTE cell back to the 2G or 3G network to execute the CS service, where the network type of the first LTE cell is the first type, and the first type is LTE FDD or LTE TDD.

202. When the user equipment completes execution of the CS service on the 2G or 3G network, the user equipment measures an LTE cell according to LTE network information, to obtain a measurement result of each LTE cell, where the LTE network information includes information about a cell of an LTE FDD type and information about a cell of an LTE TDD type.

When the UE completes execution of the CS service on the 2G or 3G network, the UE measures the LTE cell according to the LTE network information, to obtain the measurement result of each LTE cell. At an edge or in an overlapped coverage area of an LTE TDD network and an LTE FDD network, the LTE network information includes both information about a cell of an LTE FDD type and information about a cell of an LTE TDD type.

203. The user equipment selects, from an LTE cell whose measurement result meets a preset condition, a second LTE cell for accessing an LTE network, where a network type of the second LTE cell is the first type.

After measuring the LTE cell according to the LTE network information to obtain the measurement result of each LTE cell, the user equipment selects, from the LTE cell whose measurement result meets the preset condition, the second LTE cell for accessing the LTE network, where the network type of the second LTE cell is the first type, that is, the network type is the same as a network type of an LTE cell in which the user equipment is located before the fallback to the 2G/3G network to execute the CS service.

It can be understood that the preset condition can be customized according to a protocol specification or according to an actual application scenario. For example, the preset condition may be as follows: a measurement value of RSRP and/or a measurement value of RSRQ that are of an LTE cell meet/meets a specific condition.

For example, the RSRP and/or the RSRQ are/is greater than or equal to a certain threshold; for example, it can be set as follows: the cell is considered as meeting the preset condition when the RSRP is greater than or equal to -125 dBm. The preset condition may further be as follows: a public land mobility network identity (Public Land Mobility Network Identity, PLMN ID) can be parsed out from information broadcast by an LTE cell, and the PLMN ID is the same as or belongs to a same equivalent PLAN ID list as a PLMN ID selected by a non-access stratum (Non-Access Stratum, NAS) of the UE, which is not limited herein.

In this embodiment of the present invention, for UE that is at an edge or in an overlapped coverage area of an LTE TDD network and an LTE FDD network and falls back to a 2G/3G network to execute a CS service, LTE network information based on which the UE measures an LTE network after the UE completes execution of a CS service includes both information about a cell of an LTE FDD type and information about a cell of an LTE TDD type. After measuring an LTE cell according to the LTE network information, to obtain a measurement result of each LTE cell, the UE selects, from an LTE cell whose measurement result meets a preset condition, a second LTE cell whose network type is a first type (same as a network type of an LTE cell in which the UE is located before the fallback to the 2G/3G network to execute the CS service). This prevents a problem that a data bearer cannot be restored, which is caused because a network type of a returned-to LTE network is different from the network type before the fallback. In this way, the data bearer can be immediately restored, and the UE can resume a normal registration state on the LTE network without initiating an Attach process multiple times, thereby reducing time required for the UE to resume a normal registration state on the LTE network.

It is assumed that, in the foregoing embodiment, a process in which the user equipment measures the LTE cell according to the LTE network information is a measurement stage, and a process in which the second LTE cell is selected, from the LTE cell whose measurement result meets the preset condition, for accessing the LTE network is a selection stage. In an actual application, there may be multiple specific implementation manners. One of the manners is as follows: only an LTE cell whose network type is the first type is measured at the measurement stage; at the selection stage, because only the LTE cell of the first type is measured, the second LTE cell whose network type is the first type can be selected, according to the measurement result, from the LTE cell whose measurement result meets the preset condition, for access the LTE network. Another manner is as follows: an LTE cell corresponding to the LTE network information is measured at the measurement stage; at the selection stage, because the LTE cell whose measurement result meets the preset condition may include both an LTE TDD cell and an LTE FDD cell, a network type of each LTE cell needs to be first determined, and then a second LTE cell whose network type is the first type is selected, according to the measurement result and the network type of each LTE cell, from the LTE cell whose measurement result meets the preset condition, for accessing the LTE network. The following separately describes these two manners in detail.
I. Only an LTE cell whose network type is a first type is measured at a measurement stage.

Referring to FIG. 3, another embodiment of a network selection method in the embodiments of the present invention includes the following steps:
301. User equipment falls from a first LTE cell back to a 2G or 3G network to execute a CS service, where a network type of the first LTE cell is a first type.

After the UE receives a message for redirecting to or handing over to a 2G (or 3G) CS domain sent by an eNB, the UE falls from the first LTE cell back to the 2G or 3G network to execute the CS service, where the network type of the first LTE cell is the first type, and the first type is LTE FDD or LTE TDD.

Specifically, the message for redirecting to or handing over to the 2G (or 3G) CS domain sent by the eNB may be a radio connection release message RRC Connection Release (radio resource control protocol connection release message, which is also referred to as RRC for short: Radio Resource Control, radio resource control protocol) in the present invention, where the message may include redirection information. If the message includes a redirection message, the redirection information may include information about the 2G (or 3G) CS domain network. Alternatively, the message for redirecting to the 2G (or 3G) CS domain may be a cell change order message CCO (Cell Change Order), where the message may include redirection information. If the message includes a redirection message, the redirection information may include information about the 2G CS domain network. The message may also be another message, which is not limited herein. The message for redirecting to or handing over to the 2G (or 3G) CS domain sent by the eNB herein may be a "mobility from Evolved Universal Terrestrial Radio Access (network) command" (Mobility from E-UTRA Command). The message may include information for handing over to the 2G (or 3G) CS domain network. The message may be another message, which is not limited herein.

302. When the user equipment completes execution of the CS service on the 2G or 3G network, the user equipment measures only an LTE cell of the first type according to LTE network information, to obtain a measurement result of each LTE cell, where the LTE network information includes information about a cell of an LTE FDD type and information about a cell of an LTE TDD type.

When the UE completes execution of the CS service on the 2G or 3G network, the UE measures an LTE cell according to the LTE network information. At an edge or in an overlapped coverage area of an LTE TDD network and an LTE FDD network, the LTE network information includes both LTE FDD cell information and LTE TDD cell information.

It should be noted that, when returning to an LTE network from the 2G/3G network, the user equipment needs to measure an LTE cell according to the LTE network information. A source of the LTE network information may vary according to different actual network configurations:

Optionally, the LTE network information may be LTE network information provided by an access network device on the 2G or 3G network. Then, that the user equipment measures only an LTE cell of the first type according to the LTE network information is as follows: measuring, by the user equipment, only the LTE cell of the first type according to the LTE network information provided by the access network device on the 2G or 3G network. Specifically, before measuring only the LTE cell of the first type according to the LTE network information provided by the access network device on the 2G or 3G network, the user equipment may receive a radio connection release message sent by the access network device on the 2G or 3G network, where the radio connection release message carries redirection information, and the redirection information includes the LTE network information. The LTE network information includes LTE FDD cell information and LTE TDD cell information, where the LTE FDD cell information includes an LTE FDD frequency and/or an LTE FDD cell identity, and the LTE TDD cell information includes an LTE TDD frequency and/or an LTE TDD cell identity.

It can be understood that: on a 2G network, the radio connection release message may be a Channel Release or RRC Connection Release message; and on a 3G network, the radio connection release message may be an RRC Connection Release message.

It can be understood that, in an actual application, in addition to being provided by a redirection message carried in a radio connection release message, the LTE network information may also be provided by another message delivered by an access network device or a core network device to the UE, which is not limited herein.

Optionally, the LTE network information is LTE network information stored in the user equipment or all supported LTE frequencies. For example, the user equipment receives no LTE network information provided by an access network device.

Specifically, for example, a radio connection release message sent by the access network device does not carry a redirection message, and the UE autonomously measures an LTE cell. Alternatively, the UE receives LTE network information provided by an access network device, but determines, according to a local policy of the UE, not to use the LTE network information. For example, a radio connection release message sent by the access network device carries a redirection message, but the UE does not use LTE network information in the redirection message sent by the access network device, and the UE autonomously measures an LTE cell. Then, that the user equipment measures only an LTE cell of the first type according to the LTE network information is as follows: measuring, by the user equipment, only the LTE cell of the first type according to the stored LTE network information or all the supported LTE frequencies. The stored LTE network information includes LTE FDD cell information and LTE TDD cell information, where the LTE FDD cell information includes an LTE FDD frequency and/or an LTE FDD cell identity, and the LTE TDD cell information includes an LTE TDD frequency and/or an LTE TDD cell identity.

The supported frequencies include the LTE FDD frequency and the LTE TDD frequency.

It should be noted that there are multiple implementation manners for the user equipment to measure only an LTE cell of the first type according to the LTE network information, which are specifically divided into two categories:
Category 1: A network type of an LTE cell corresponding to a frequency or cell identity in the LTE network information is identified at an early stage of measurement before cell search is performed, and only a frequency or cell identity of the LTE cell of the first type is measured.

Optionally, the user equipment determines a frequency belonging to a frequency band of the first type in the LTE network information, searches for only the frequency belonging to the frequency band of the first type, and continues to measure a found LTE cell.

Optionally, the user equipment determines, according to the stored LTE network information, a frequency and/or a cell identity that are/is in the LTE network information and that are/is corresponding to the LTE cell of the first type, searches for only the frequency and/or the cell identity that are/is corresponding to the LTE cell of the first type, and continues to measure a found LTE cell, where the stored LTE network information includes a network type of an LTE cell that is corresponding to a frequency and/or a cell identity.

Optionally, the user equipment determines, according to LTE FDD or LTE TDD indication information delivered by the 2G or 3G network, a frequency and/or a cell identity that are/is corresponding to the LTE cell of the first type, searches for only the frequency and/or the cell identity that are/is corresponding to the LTE cell of the first type, and continues to measure a found LTE cell.

Category 2: The user equipment first searches for an LTE cell according to the LTE network information; then determines a network type of each found LTE cell based on information about the LTE cell; and continues to measure only an LTE cell whose network type is the first type.

Optionally, the user equipment determines a network type of each found LTE cell according to locations/a location of a primary synchronization signal and/or secondary synchronization signal in a frame of the LTE cell, and continues to measure only an LTE cell whose network type is the first type. Specifically, for FDD, a PSS is sent in the last symbols (symbol) of the first timeslots (slot) in subframe 0 and subframe 5, and an SSS is sent in the same timeslots and same subframes as the PSS, but the SSS is located in the last but one symbols, which is one symbol prior to the PSS. For TDD, a PSS is sent in the third symbols of subframe 1 and subframe 6 (which is a DwPTS: Downlink Pilot Time Slot, downlink pilot time slot), and an SSS is sent in the last symbols in subframe 0 and subframe 5, which is three symbols prior to the PSS.

Optionally, the user equipment determines a network type of each found LTE cell according to whether an uplink frequency and a downlink frequency of the LTE cell are the same. If the uplink frequency and the downlink frequency of an LTE cell are the same, the LTE cell is an LTE TDD cell; or if the uplink frequency and the downlink frequency of an LTE cell are different, the LTE cell is an LTE FDD cell; and the user equipment continues to measure only an LTE cell whose network type is the first type.

It can be understood that the foregoing manners for measuring only an LTE cell of the first type may be used independently or may be combined for use. In addition, there may be another manner for measuring only an LTE cell of the first type.

303. The user equipment selects, from an LTE cell of the first type whose measurement result meets a preset condition, a second LTE cell for accessing an LTE network, where a network type of the second LTE cell is the first type.

After measuring only the LTE of the first type according to the LTE network information to obtain the measurement result of each LTE cell, the user equipment selects, from an LTE cell that is of the first type and whose measurement result meets the preset condition, the second LTE cell for accessing the LTE network, where the network type of the second LTE cell is the first type, that is, the network type is the same as a network type of an LTE cell in which the user equipment is located before the fallback to the 2G/3G network to execute the CS service.

It can be understood that, there may be multiple LTE cells of the first type whose measurement results meet the preset condition, and there are many manners for selecting the second LTE cell therefrom. For example, a cell with highest reference signal strength and/or with best reference signal quality in the LTE cell that is of the first type and whose measurement result meets the preset condition may be selected as the second LTE cell. Another manner may also be used, or a cell may be required to meet another condition according to a requirement of an actual situation or a protocol specification. For example, if the LTE cell whose measurement result meets the preset condition includes multiple LTE cells of the first type, and the LTE cells of the first type have different public land mobility network identities (Public Land Mobility Network Identity, PLMN ID), the UE selects an LTE cell whose PLMN ID is the same as a PLMN ID of an LTE cell in which the UE is located before the fallback or an LTE cell corresponding to a PLMN ID belonging to a same equivalent PLMN ID list as a PLMN ID of an LTE cell in which the UE is located before the fallback, or selects an LTE cell corresponding to a PLMN ID whose priority is higher than that of a PLMN ID of an LTE cell in which the UE is located before the fallback. For example, if a network type of an LTE network before the fallback is LTE FDD, and a PLMN ID of the LTE network before the fallback is PLMN ID1, and if the UE obtains multiple LTE FDD cells of the first type through measurement, the UE selects an LTE FDD cell whose PLMN ID is PLMN ID1 or an LTE FDD cell corresponding to a PLMN ID in a same equivalent PLMN list as PLMN ID1, or selects an LTE FDD cell corresponding to a PLMN ID whose priority is higher than that of PLMN ID1, which is not limited herein.

In this embodiment of the present invention, at the measurement stage, user equipment measures only an LTE cell whose network type is a first type, and does not measure an LTE cell of a different network type than an LTE cell before fallback, which saves system overheads and accelerates access to a correct LTE network.
II. All LTE cells are measured at a measurement stage, and an LTE cell whose network type is a first type is selected at a selection stage.

Referring to FIG. 4, another embodiment of a network selection method in the embodiments of the present invention includes the following steps:
401. User equipment falls from a first LTE cell back to a 2G or 3G network to execute a CS service, where a network type of the first LTE cell is a first type.

This step is similar to step 301, and details are not described herein.

402. When the user equipment completes execution of the CS service on the 2G or 3G network, the user equipment measures an LTE FDD cell and an LTE TDD cell according to the LTE network information, to obtain a measurement result of each LTE cell.

When the UE completes execution of the CS service on the 2G or 3G network, the UE measures the LTE FDD cell and the LTE TDD cell according to the LTE network information, to obtain the measurement result of each LTE cell. At an edge or in an overlapped coverage area of an LTE TDD network and an LTE FDD network, the LTE network information includes both information about a cell of an LTE FDD type and information about a cell of an LTE TDD type.

It should be noted that, when returning to an LTE network from the 2G/3G network, the user equipment needs to measure an LTE cell according to the LTE network information. A source of the LTE network information may vary according to different actual network configurations:

Optionally, the LTE network information may be LTE network information provided by an access network device on the 2G or 3G network. Then, that the user equipment measures an LTE FDD cell and an LTE TDD cell according to the LTE network information is as follows: measuring, by the user equipment, the LTE FDD cell and the LTE TDD cell according to the LTE network information provided by the access network device on the 2G or 3G network. Specifically, before measuring the LTE FDD cell and the LTE TDD cell according to the LTE network information provided by the access network device on the 2G or 3G network, the user equipment may receive a radio connection release message sent by the access network device on the 2G or 3G network, where the radio connection release message carries redirection information, and the redirection information includes the LTE network information.

The LTE network information includes LTE FDD cell information and LTE TDD cell information, where the LTE FDD cell information includes an LTE FDD frequency and/or an LTE FDD cell identity, and the LTE TDD cell information includes an LTE TDD frequency and/or an LTE TDD cell identity.

It can be understood that: on a 2G network, the radio connection release message may be a Channel Release or RRC Connection Release message; and on a 3G network, the radio connection release message may be an RRC Connection Release message.

It can be understood that, in an actual application, in addition to being provided by a redirection message carried in a radio connection release message, the LTE network information may also be provided by another message delivered by an access network device or a core network device to the UE, which is not limited herein.

Optionally, the LTE network information is LTE network information stored in the user equipment or all supported LTE frequencies. For example, the user equipment receives no LTE network information provided by an access network device.

Specifically, for example, a radio connection release message sent by the access network device does not carry a redirection message, and the UE autonomously measures an LTE cell. Alternatively, the UE receives LTE network information provided by an access network device, but determines, according to a local policy of the UE, not to use the LTE network information. For example, a radio connection release message sent by the access network device carries a redirection message, but the UE does not use LTE network information in the redirection message sent by the access network device, and the UE autonomously measures an LTE cell. Then, that the user equipment measures an LTE FDD cell and an LTE TDD cell according to the LTE network information includes: measuring, by the user equipment, the LTE FDD cell and the LTE TDD cell according to the stored LTE network information and all the supported LTE frequencies. The stored LTE network information includes LTE FDD cell information and LTE TDD cell information. The stored LTE network information includes LTE FDD cell information and LTE TDD cell information, where the LTE FDD cell information includes an LTE FDD frequency and/or an LTE FDD cell identity, and the LTE TDD cell information includes an LTE TDD frequency and/or an LTE TDD cell identity. The supported frequencies include the LTE FDD frequency and the LTE TDD frequency.

403. The user equipment determines a network type of each LTE cell in an LTE cell whose measurement result meets a preset condition.

The user equipment measures the LTE FDD cell and the LTE TDD cell, to obtain a measurement result of each LTE cell, and determine a network type of each LTE cell in the LTE cell whose measurement result meets the preset condition.

It can be understood that there are multiple manners for determining the network type of each LTE cell in the LTE cell whose measurement result meets the preset condition:

Optionally, the user equipment determines, according to whether a frequency of each LTE cell belongs to an LTE FDD frequency band or an LTE TDD frequency band, the network type of each LTE cell in the LTE cell whose measurement result meets the preset condition.

Optionally, the user equipment determines, according to locations/a location of a primary synchronization signal PSS and/or secondary synchronization signal in a frame of each LTE cell, the network type of each LTE cell in the LTE cell whose measurement result meets the preset condition. Specifically, for FDD, a PSS is sent in the last symbols of the first slots in subframe 0 and sub frame 5, and an SSS is sent in the same slots and same subframes as the PSS, but the SSS is located in the last but one symbols, which is one symbol prior to the PSS. For TDD, a PSS is sent in the third symbols of subframe 1 and subframe 6 (that is, DwPTS), and an SSS is sent in the last symbols in subframe 0 and subframe 5, which is three symbols prior to the PSS.

Optionally, the user equipment determines, according to the stored LTE network information, a network type of each LTE cell in the LTE cell whose measurement result meets the preset condition, where the stored LTE network information includes a network type of an LTE cell.

Optionally, the user equipment determines, according to LTE FDD and/or LTE TDD indication information delivered by the 2G or 3G network, a network type of each LTE cell in the LTE cell whose measurement result meets the preset condition.

Optionally, the user equipment determines, according to whether an uplink frequency and a downlink frequency of each LTE cell are the same, a network type of each LTE cell in the LTE cell whose measurement result meets the preset condition. If the uplink frequency and the downlink frequency of an LTE cell are the same, the cell is an LTE TDD cell; or if the uplink frequency and the downlink frequency of an LTE cell are different, the cell is an LTE FDD cell.

It can be understood that the foregoing manners for determining the network type of each LTE cell in the LTE cell obtained through measurement may be used alone or may be combined for use. In addition, there may be another manner for determining the network type of each LTE cell in the LTE cell whose measurement result meets the preset condition, which is not limited herein.

404. The user equipment selects, from an LTE cell whose network type is the first type in the LTE cell whose measurement result meets the preset condition, a second LTE cell for accessing an LTE network, where a network type of the second LTE cell is the first type.

After determining the network type of each LTE cell in the LTE cell whose measurement result meets the preset condition, the user equipment selects, from the LTE cell whose network type is the first type in the LTE cell whose measurement result meets the preset condition, the second LTE cell for accessing the LTE network, where the network type of the second LTE cell is the first type, that is, the network type is the same as a network type of an LTE cell in which the user equipment is located before the fallback to the 2G/3G network to execute the CS service.

It can be understood that, after the user equipment determines the network type of each LTE cell in the LTE cell whose measurement result meets the preset condition, there may be multiple LTE cells whose network type is the first type in the obtained LTE cell whose measurement result meets the preset condition, and there are many manners for selecting the second LTE cell therefrom. For example, a cell with highest reference signal strength and/or best reference signal quality in the LTE cell whose network type is the first type in the LTE cell whose measurement result meets the preset condition may be selected as the second LTE cell. Another manner may also be used or a cell may be required to meet another condition according to a requirement of an actual situation or a protocol specification. For example, if multiple LTE cells of the first type in the LTE cell are obtained by the UE through measurement, and the LTE cells of the first type have different public land mobility network identities (Public Land Mobility Network Identity, PLMN ID), the UE selects an LTE cell whose PLMN ID is the same as a PLMN ID of an LTE cell in which the UE is located before the fallback or an LTE cell corresponding to a PLMN ID belonging to a same equivalent PLMN ID list as a PLMN ID of an LTE cell in which the UE is located before the fallback, or selects an LTE cell corresponding to a PLMN ID whose priority is higher than that of a PLMN ID of an LTE cell in which the UE is located before the fallback. For example, if a network type of an LTE network before the fallback is LTE FDD, and a PLMN ID of the LTE network before the fallback is PLMN ID1, and if the UE obtains multiple LTE FDD cells of the first type through measurement, the UE selects an LTE FDD cell whose PLMN ID is PLMN ID1 or an LTE FDD cell corresponding to a PLMN ID in a same equivalent PLMN list as PLMN ID1, or selects an LTE FDD cell corresponding to a PLMN ID whose priority is higher than that of PLMN ID1, which is not limited herein.

In this embodiment of the present invention, the prior art does not need to be changed for a measurement stage of UE; at a selection stage, the UE only needs to first determine a network type of an LTE cell whose measurement result obtained at the measurement stage meets a preset condition, and then select a second LTE network from an LTE cell whose network type is a first type in the LTE cell whose measurement result meets the preset condition. This achieves an effect that the UE selects the second LTE cell whose network type is the same a network type of a first LTE cell in which the UE is located before fallback, to return to an LTE network, which reduces time required for resuming a normal registration state on the LTE network, thereby improving speed at which the UE resumes a normal registration state on the LTE network.

In the foregoing embodiments, a specific process in which user equipment falls from a first LTE cell back to a 2G or 3G network to execute a CS service may be as follows: the user equipment falls from the LTE cell back to the 2G or 3G network, a packet switched data bearer is suspended or is handed over to the 2G or 3G network, and the UE executes the CS service on the 2G or 3G network. Correspondingly, after the user equipment selects a second LTE cell to access an LTE network, the user equipment can detect whether the packet switched data bearer is successfully restored or in an activated state. If the packet switched data bearer is restored or in an activated state, the user equipment initiates a tracking area update TAU process in the second LTE cell; or if the packet switched data bearer is not restored or in an activated state, the user equipment initiates an LTE attach procedure in the second LTE cell.

If the UE fails to execute the TAU or Attach process in the second LTE cell, the UE may reselect an LTE cell whose network type is different from a first type, and initiate a TAU or LTE Attach process, to register to an LTE FDD network. In the embodiment corresponding to FIG. 3, the UE does not measure an LTE cell whose network type is different from the first type. In this case, the UE needs to first measure the LTE cell whose network type is different from the first type.

Specifically, the TAU process may be a combined tracking area and location area updating (Combined TA/LA Updating) process, or a combined tracking area and location area updating with IMSI attach (Combined TA/LA Updating with IMSI Attach) process. The LTE attach process may be a combined evolved packet system and IMSI attach (Combined EPS/IMSI Attach) process. After receiving a TAU or Attach request message sent by the UE, an MME may initiate a location area updating (Location Area Updating, CS LAU) or IMSI attach (IMSI Attach) process to an MSC Server, that is, a CS registration process.

The following describes user equipment in the embodiments of the present invention:

Referring to FIG. 5, an embodiment of user equipment in the embodiments of the present invention includes:
a fallback module 501, configured to fall from an LTE cell back to a 2G or 3G network to execute a circuit switched CS service, where a network type of the first LTE cell is a first type, and the first type is LTE FDD or LTE TDD;
a measurement module 502, configured to: when the user equipment completes execution of the CS service on the 2G or 3G network, measure an LTE cell according to LTE network information, to obtain a measurement result of each LTE cell, where the LTE network information includes information about a cell of an LTE FDD type and information about a cell of an LTE TDD type; and
a selection module 503, configured to select, from an LTE cell whose measurement result meets a preset condition, a second LTE cell for accessing an LTE network, where a network type of the second LTE cell is the first type.

In this embodiment of the present invention, for UE that is at an edge or in an overlapped coverage area of an LTE TDD network and an LTE FDD network, after a fallback module 501 falls back to a 2G/3G network and completes execution of a CS service, LTE network information based on which a measurement module 502 measures an LTE network includes both information about a cell of an LTE FDD type and information about a cell of an LTE TDD type. After the measurement module 502 measures an LTE cell according to the LTE network information, to obtain a measurement result of each LTE cell, a selection module 503 selects, from an LTE cell whose measurement result meets a preset condition, a second LTE cell whose network type is a first type (same as a network type of an LTE cell in which the UE is located before the fallback to the 2G/3G network to execute the CS service). This prevents a problem that a data bearer cannot be restored, which is caused because a network type of a returned-to LTE network is different from the network type before the fallback. In this way, the data bearer can be immediately restored, and the UE can resume a normal registration state on the LTE network without initiating an Attach process multiple times, thereby reducing time required for the UE to resume a normal registration state on the LTE network.

In the foregoing embodiment, there may be multiple sources of the LTE network information. The LTE network information may be LTE network information provided by an access network device on the 2G or 3G network, or may be LTE network information stored in the user equipment, or may be all LTE frequencies supported by the user equipment, which is not limited herein.

In the foregoing embodiment, the selection module 503 selects the second LTE cell for accessing an LTE network. Therefore, a process of determining a network type of an LTE cell is required. In an actual application, the process may be completed by the measurement module 502 or may be completed by the selection module 503.
I. The process is completed by the measurement module 502.

As another embodiment of the user equipment in the embodiments of the present invention, the measurement module 502 is specifically configured to: when the user equipment completes execution of the CS service on the 2G or 3G network, measure only an LTE cell of the first type according to the LTE network information, to obtain a measurement result of each LTE cell, where the LTE network information includes the information about a cell of an LTE FDD type and the information about a cell of an LTE TDD type; and
the selection module 503 is specifically configured to select, from an LTE cell that is of the first type and whose measurement result meets the preset condition, the second LTE cell for accessing the LTE network, where the network type of the second LTE cell is the first type.

In this embodiment, the process of determining a network type of an LTE cell is completed by the measurement module 502.

In an actual application, implementation manners in which the measurement module 502 measures only an LTE cell of the first type according to the LTE network information are divided into two categories: In one category, a network type of an LTE cell corresponding to a frequency or cell identity is determined before cell search is performed, and only a frequency or cell identity of the LTE cell of the first type is searched for; in the other category, an LTE cell is first searched for, and then a network type of a found LTE cell is determined. The following describes the user equipment in the embodiments of the present invention in detail.

Referring to FIG. 6, as another embodiment of the user equipment in the embodiments of the present invention, the measurement module 502 in the embodiment shown in FIG. 5 specifically includes:
a first search unit 601, configured to: when the user equipment completes execution of the CS service on the 2G or 3G network, determine a frequency belonging to a frequency band of the first type in the LTE network information, and search for only the frequency belonging to the frequency band of the first type; and/or determine, according to the stored LTE network information, a frequency and/or a cell identity that are/is in the LTE network information and that are/is corresponding to the LTE cell of the first type, and search for only the frequency and/or the cell identity that are/is corresponding to the LTE cell of the first type; and/or determine, according to LTE FDD or LTE TDD indication information delivered by the 2G or 3G network, a frequency and/or a cell identity that are/is corresponding to the LTE cell of the first type, and search for only the frequency and/or the cell identity that are/is corresponding to the LTE cell of the first type; and
a first measurement unit 602, configured to continue to measure an LTE cell found by the first search unit 601, to obtain the measurement result of each LTE cell.

In this embodiment, the first search unit 601 determines a network type of an LTE cell corresponding to a frequency or cell identity before cell search, and searches for only a frequency and/or a cell identity corresponding to an LTE cell of the first type.

Referring to FIG. 7, as another embodiment of the user equipment in the embodiments of the present invention, the measurement module 502 in the embodiment shown in FIG. 5 specifically includes:
a second search unit 701, configured to search for an LTE cell according to the LTE network information; and
a second measurement unit 702, configured to: determine a network type of each found LTE cell according to locations/a location of a primary synchronization signal and/or secondary synchronization signal in a frame of the LTE cell found by the second search unit 701, and/or according to whether an uplink frequency and a downlink frequency of each LTE cell found by the second search unit are the same; and continue to measure only an LTE cell whose network type is the first type.

In this embodiment, the second search unit 701 directly searches for an LTE cell according to LTE network information, and the second measurement unit 702 first determines a network type of a found LTE cell and then measures a found LTE cell.
I. The process is completed by the selection module 503.

Referring to FIG. 8, as another embodiment of the user equipment in the embodiments of the present invention, the measurement module 502 in the embodiment shown in FIG. 5 is specifically configured to: when the user equipment completes execution of the CS service on the 2G or 3G network, measure an LTE FDD cell and an LTE TDD cell according to the LTE network information, to obtain a measurement result of each LTE cell, where the LTE network information includes the information about a cell of an LTE FDD type and the information about a cell of an LTE TDD type; and
the selection module 503 specifically includes:
a determining unit 801, configured to determine a network type of each LTE cell in the LTE cell whose measurement result meets the preset condition; and
a selection unit 802, configured to select, from an LTE cell whose network type is the first type in the LTE cell whose measurement result meets the preset condition, the second LTE cell for accessing the LTE network.

Optionally, in an actual application, the determining unit 801 is specifically configured to: determine a network type of each LTE cell in the LTE cell whose measurement result meets the preset condition, according to whether a frequency of each LTE cell belongs to an LTE FDD frequency band or an LTE TDD frequency band, and/or according to locations/a location of a primary synchronization signal PSS and/or secondary synchronization signal in a frame of each LTE cell, and/or according to the stored LTE network information, and/or according to LTE FDD and/or LTE TDD indication information delivered by the 2G or 3G network, and/or according to whether an uplink frequency and a downlink frequency of each LTE cell are the same, where the stored LTE network information includes a network type of an LTE cell.

In this embodiment, the process of determining a network type of an LTE cell is completed by the determining unit 801 in the measurement module 502.

Referring to FIG. 9, another embodiment of user equipment 900 in the embodiments of the present invention includes:
an input apparatus 901, an output apparatus 902, a processor 903, and a memory 904 (where the user equipment 900 may include one or more processors 903. In FIG. 9, one processor 903 is used as an example). In some embodiments of the present invention, the input apparatus 901, the output apparatus 902, the processor 903, and the memory 904 may be connected by using a bus or in another manner. In

FIG. 9, connection by using a bus is used as an example.

The processor 903 is configured to execute the following steps by invoking an operation instruction stored in the memory 904:
falling from an LTE cell back to a 2G or 3G network to execute a circuit switched CS service, where a network type of the first LTE cell is a first type, and the first type is LTE FDD or LTE TDD;
when the user equipment completes execution of the CS service on the 2G or 3G network, measuring an LTE cell according to LTE network information, to obtain a measurement result of each LTE cell, where the LTE network information includes information about a cell of an LTE FDD type and information about a cell of an LTE TDD type; and
selecting, from an LTE cell whose measurement result meets a preset condition, a second LTE cell for accessing an LTE network, where a network type of the second LTE cell is the first type.

In some embodiments of the present invention, the processor 903 is specifically configured to execute the following steps:
when the user equipment completes execution of the CS service on the 2G or 3G network, measuring only an LTE cell of the first type according to the LTE network information, to obtain a measurement result of each LTE cell, where the LTE network information includes the information about a cell of an LTE FDD type and the information about a cell of an LTE TDD type; and
selecting, from an LTE cell that is of the first type and whose measurement result meets the preset condition, the second LTE cell for accessing the LTE network, where the network type of the second LTE cell is the first type.

In some embodiments of the present invention, the processor 903 is specifically configured to execute the following steps:
when the user equipment completes execution of the CS service on the 2G or 3G network, determining a frequency belonging to a frequency band of the first type in the LTE network information, and searching for only the frequency belonging to the frequency band of the first type; and/or determining, according to stored LTE network information, a frequency and/or a cell identity that are/is in the LTE network information and that are/is corresponding to the LTE cell of the first type, and searching for only the frequency and/or the cell identity that are/is corresponding to the LTE cell of the first type; and/or determining, according to LTE FDD or LTE TDD indication information delivered by the 2G or 3G network, a frequency and/or a cell identity that are/is corresponding to the LTE cell of the first type, and searching for only the frequency and/or the cell identity that are/is corresponding to the LTE cell of the first type; and
continuing to measure a found LTE cell, to obtain the measurement result of each LTE cell.

In some embodiments of the present invention, the processor 903 is specifically configured to execute the following steps:
searching for an LTE cell according to the LTE network information; and
determining a network type of each found LTE cell according to locations/a location of a primary synchronization signal and/or secondary synchronization signal in a frame of each found LTE cell, and/or according to whether an uplink frequency and a downlink frequency of each found LTE cell are the same; and continuing to measure only an LTE cell whose network type is the first type.

In some embodiments of the present invention, the processor 903 is specifically configured to execute the following steps:
when the user equipment completes execution of the CS service on the 2G or 3G network, measuring an LTE FDD cell and an LTE TDD cell according to the LTE network information, to obtain a measurement result of each LTE cell, where the LTE network information includes the information about a cell of an LTE FDD type and the information about a cell of an LTE TDD type;
determining a network type of each LTE cell in the LTE cell whose measurement result meets the preset condition; and
selecting, from an LTE cell whose network type is the first type in the LTE cell whose measurement result meets the preset condition, the second LTE cell for accessing the LTE network.

In some embodiments of the present invention, the processor 903 is specifically configured to execute the following steps:
determining a network type of each LTE cell in the LTE cell whose measurement result meets the preset condition, according to whether a frequency of each LTE cell belongs to an LTE FDD frequency band or an LTE TDD frequency band, and/or according to locations/a location of a primary synchronization signal PSS and/or secondary synchronization signal in a frame of each LTE cell, and/or according to stored LTE network information, and/or according to LTE FDD and/or LTE TDD indication information delivered by the 2G or 3G network, and/or according to whether an uplink frequency and a downlink frequency of each LTE cell are the same, where the stored LTE network information includes a network type of an LTE cell.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners.

For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A network selection method, comprising:
falling (201, 301, 401), by user equipment, from a first Long Term Evolution, LTE, cell back to a second generation mobile communications system, 2G, network or a third generation mobile communications system, 3G, network to execute a circuit switched, CS, service, wherein a network type of the first LTE cell is a first type, and the first type is LTE frequency division duplex, FDD, or LTE time division duplex, TDD;
when the user equipment completes execution of the CS service on the 2G or 3G network, measuring (202), by the user equipment, an LTE cell according to LTE network information, to obtain a measurement result of each LTE cell of at least the first type, wherein, at an edge or in an overlapped coverage area of an LTE TDD network and an LTE FDD network, the LTE network information comprises information about a cell of an LTE FDD type and information about a cell of an LTE TDD type; and
selecting (203), by the user equipment from an LTE cell whose measurement result meets a preset condition, a second LTE cell for accessing an LTE network, wherein a network type of the second LTE cell is the first type:
wherein, in the step of measuring or selecting, a network type of LTE cells to be measured or LTE cells whose measurement result meets a preset condition is determined, respectively.

2. The method according to claim 1, wherein the LTE network information is LTE network information provided by an access network device on the 2G or 3G network, or LTE network information stored in the user equipment, or all LTE frequencies supported by the user equipment.

3. The method according to claim 1 or 2, wherein the measuring (202), by the user equipment, an LTE cell according to LTE network information comprises:
measuring (302), by the user equipment, only an LTE cell of the first type according to the LTE network information; and
the selecting (203), by the user equipment from an LTE cell whose measurement result meets a preset condition, a second LTE cell for accessing an LTE network comprises:
selecting (303), by the user equipment from an LTE cell that is of the first type and whose measurement result meets the preset condition, the second LTE cell for accessing the LTE network.

4. The method according to claim 3, wherein the measuring (302), by the user equipment, only an LTE cell of the first type according to the LTE network information comprises:
determining, by the user equipment, a frequency belonging to a frequency band of the first type in the LTE network information, searching for only the frequency belonging to the frequency band of the first type, and continuing to measure a found LTE cell; and/or
determining, by the user equipment according to the stored LTE network information, a frequency and/or a cell identity that are/is in the LTE network information and that are/is corresponding to the LTE cell of the first type, searching for only the frequency and/or the cell identity that are/is corresponding to the LTE cell of the first type, and continuing to measure a found LTE cell, wherein the stored LTE network information comprises a network type of an LTE cell that is corresponding to a frequency and/or a cell identity; and/or
determining, by the user equipment according to LTE FDD or LTE TDD indication information delivered by the 2G or 3G network, a frequency and/or a cell identity that are/is corresponding to the LTE cell of the first type, searching for only the frequency and/or the cell identity that are/is corresponding to the LTE cell of the first type, and continuing to measure a found LTE cell.

5. The method according to claim 3, wherein the measuring (302), by the user equipment, only an LTE cell of the first type according to the LTE network information comprises:
searching, by the user equipment, for an LTE cell according to the LTE network information;
determining, by the user equipment, a network type of each found LTE cell according to locations/a location of a primary synchronization signal and/or secondary synchronization signal in a frame of the LTE cell, and continuing to measure only an LTE cell whose network type is the first type; and/or
determining, by the user equipment, a network type of each found LTE cell according to whether an uplink frequency and a downlink frequency of the LTE cell are the same, and continuing to measure only an LTE cell whose network type is the first type.

6. The method according to claim 1 or 2, wherein the measuring (202), by the user equipment, an LTE cell according to LTE network information comprises:
measuring (402), by the user equipment, an LTE FDD cell and an LTE TDD cell according to the LTE network information; and
the selecting (203), by the user equipment from an LTE cell whose measurement result meets a preset condition, a second LTE cell for accessing an LTE network comprises:
determining (403), by the user equipment, a network type of each LTE cell in the LTE cell whose measurement result meets the preset condition; and
selecting (404), by the user equipment from an LTE cell whose network type is the first type in the LTE cell whose measurement result meets the preset condition, the second LTE cell for accessing the LTE network.

7. The method according to claim 6, wherein the determining (403), by the user equipment, a network type of each LTE cell in the LTE cell whose measurement result meets the preset condition comprises:
determining, by the user equipment according to whether a frequency of each LTE cell belongs to an LTE FDD frequency band or an LTE TDD frequency band, the network type of each LTE cell in the LTE cell whose measurement result meets the preset condition; and/or
determining, by the user equipment according to locations/a location of a primary synchronization signal PSS and/or secondary synchronization signal in a frame of each LTE cell, the network type of each LTE cell in the LTE cell whose measurement result meets the preset condition; and/or
determining, by the user equipment according to the stored LTE network information, the network type of each LTE cell in the LTE cell whose measurement result meets the preset condition, wherein the stored LTE network information comprises a network type of an LTE cell; and/or
determining, by the user equipment according to LTE FDD and/or LTE TDD indication information delivered by the 2G or 3G network, the network type of each LTE cell in the LTE cell whose measurement result meets the preset condition; and/or
determining, by the user equipment according to whether an uplink frequency and a downlink frequency of each LTE cell are the same, the network type of each LTE cell in the LTE cell whose measurement result meets the preset condition.

8. User equipment, comprising:
a fallback module (501), configured to fall from an LTE cell back to a 2G or 3G network to execute a circuit switched CS service, wherein a network type of the first LTE cell is a first type, and the first type is LTE FDD or LTE TDD;
a measurement module (502), configured to: when the user equipment completes execution of the CS service on the 2G or 3G network, measure an LTE cell according to LTE network information, to obtain a measurement result of each LTE cell of at least the first type, wherein, at an edge or in an overlapped coverage area of an LTE TDD network and an LTE FDD network, the LTE network information comprises information about a cell of an LTE FDD type and information about a cell of an LTE TDD type; and
a selection module (503), configured to select, from an LTE cell whose measurement result meets a preset condition, a second LTE cell for accessing an LTE network, wherein a network type of the second LTE cell is the first type:
wherein the measurement module (502) or the selection module (503) is further configured to determine a network type of LTE cells to be measured or LTE cells whose measurement result meets a preset condition, respectively.

9. The user equipment according to claim 8, wherein the measurement module (502) is specifically configured to: when the user equipment completes execution of the CS service on the 2G or 3G network, measure only an LTE cell of the first type according to the LTE network information, to obtain a measurement result of each LTE cell, wherein the LTE network information comprises the information about a cell of an LTE FDD type and the information about a cell of an LTE TDD type; and
the selection module (503) is specifically configured to select, from an LTE cell that is of the first type and whose measurement result meets the preset condition, the second LTE cell for accessing the LTE network, wherein the network type of the second LTE cell is the first type.

10. The user equipment according to claim 9, wherein the measurement module (502) specifically comprises:
a first search unit (601), configured to: when the user equipment completes execution of the CS service on the 2G or 3G network, determine a frequency belonging to a frequency band of the first type in the LTE network information, and search for only the frequency belonging to the frequency band of the first type; and/or determine, according to stored LTE network information, a frequency and/or a cell identity that are/is in the LTE network information and that are/is corresponding to the LTE cell of the first type, and search for only the frequency and/or the cell identity that are/is corresponding to the LTE cell of the first type; and/or determine, according to LTE FDD or LTE TDD indication information delivered by the 2G or 3G network, a frequency and/or a cell identity that are/is corresponding to the LTE cell of the first type, and search for only the frequency and/or the cell identity that are/is corresponding to the LTE cell of the first type; and
a first measurement unit (602), configured to continue to measure an LTE cell found by the first search unit (601), to obtain the measurement result of each LTE cell.

11. The user equipment according to claim 9, wherein the measurement module (502) specifically comprises:
a second search unit (701), configured to search for an LTE cell according to the LTE network information; and
a second measurement unit (702), configured to: determine a network type of each found LTE cell according to locations/a location of a primary synchronization signal and/or secondary synchronization signal in a frame of the LTE cell found by the second search unit (701), and/or according to whether an uplink frequency and a downlink frequency of each LTE cell found by the second search unit (701) are the same; and continue to measure only an LTE cell whose network type is the first type.

12. The user equipment according to claim 8, wherein the measurement module (502) is specifically configured to: when the user equipment completes execution of the CS service on the 2G or 3G network, measure an LTE FDD cell and an LTE TDD cell according to the LTE network information, to obtain a measurement result of each LTE cell, wherein the LTE network information comprises the information about a cell of an LTE FDD type and the information about a cell of an LTE TDD type; and
the selection module (503) specifically comprises:
a determining unit (801), configured to determine a network type of each LTE cell in the LTE cell whose measurement result meets the preset condition; and
a selection unit (802), configured to select, from an LTE cell whose network type is the first type in the LTE cell whose measurement result meets the preset condition, the second LTE cell for accessing the LTE network.

13. The user equipment according to claim 12, wherein the determining unit (802) is specifically configured to: determine a network type of each LTE cell in the LTE cell whose measurement result meets the preset condition, according to whether a frequency of each LTE cell belongs to an LTE FDD frequency band or an LTE TDD frequency band, and/or according to locations/a location of a primary synchronization signal PSS and/or secondary synchronization signal in a frame of each LTE cell, and/or according to stored LTE network information, and/or according to LTE FDD and/or LTE TDD indication information delivered by the 2G or 3G network, and/or according to whether an uplink frequency and a downlink frequency of each LTE cell are the same, wherein the stored LTE network information comprises a network type of an LTE cell.

## Patentansprüche

1. Netzwerkauswahlverfahren, das Folgendes umfasst:
Fallen (201, 301, 401) durch eine Teilnehmereinrichtung von einer ersten "Long Term Evolution"(LTE)-Zelle zurück in ein Netzwerk eines mobilen Kommunikationssystems der zweiten Generation, 2G; oder ein Netzwerk eines mobilen Kommunikationssystems der dritten Generation, 3G, um einen leitungsvermittelten ("Circuit Switched", CS) Dienst auszuführen, wobei ein Netzwerktyp der ersten LTE-Zelle ein erster Typ und der erste Typ LTE-Frequenzduplex, FDD, oder LTE-Zeitduplex, TDD, ist;
wenn die Teilnehmereinrichtung die Ausführung des CS-Dienstes im 2G- oder 3G-Netzwerk abschließt, Messen (202) durch die Teilnehmereinrichtung einer LTE-Zelle gemäß LTE-Netzwerkinformationen, um ein Messergebnis von jeder LTE-Zelle mindestens des ersten Typs zu erhalten, wobei an einem Rand oder in einem überlappten Abdeckungsbereich eines LTE TDD-Netzwerks und eines LTE FDD-Netzwerks die LTE-Netzwerkinformationen Informationen über eine Zelle eines LTE FDD-Typs und Informationen über eine Zelle eines LTE TDD-Typs umfassen; und
Auswählen (203) durch die Teilnehmereinrichtung aus einer LTE-Zelle, deren Messergebnis eine voreingestellte Bedingung erfüllt, einer zweiten LTE-Zelle zum Zugreifen auf ein LTE-Netzwerk, wobei ein Netzwerktyp der zweiten LTE-Zelle der erste Typ ist:
wobei im Schritt des Messens oder des Auswählens ein Netzwerktyp von zu messenden LTE-Zellen bzw. LTE-Zellen, deren Messergebnis eine voreingestellte Bedingung erfüllt, bestimmt wird.

2. Verfahren nach Anspruch 1, wobei es sich bei den LTE-Netzwerkinformationen um LTE-Netzwerkinformationen handelt, die von einer Zugangsnetzwerkvorrichtung im 2G- oder 3G-Netzwerk bereitgestellt werden, oder um LTE-Netzwerkinformationen, die in der Teilnehmereinrichtung gespeichert sind, oder um alle LTE-Frequenzen, die von der Teilnehmereinrichtung unterstützt werden.

3. Verfahren nach Anspruch 1 oder 2, wobei das Messen (202) durch die Teilnehmereinrichtung einer LTE-Zelle gemäß den LTE-Netzwerkinformationen Folgendes umfasst:
Messen (302) durch die Teilnehmereinrichtung nur einer LTE-Zelle des ersten Typs gemäß den LTE-Netzwerkinformationen; und
das Auswählen (203) durch die Teilnehmereinrichtung aus einer LTE-Zelle, deren Messergebnis eine voreingestellte Bedingung erfüllt, einer zweiten LTE-Zelle zum Zugreifen auf ein LTE-Netzwerk Folgendes umfasst:
Auswählen (303) durch die Teilnehmereinrichtung aus einer LTE-Zelle, die vom ersten Typ ist und deren Messergebnis die voreingestellte Bedingung erfüllt, der zweiten LTE-Zelle zum Zugreifen auf das LTE-Netzwerk.

4. Verfahren nach Anspruch 3, wobei das Messen (302) durch die Teilnehmereinrichtung nur einer LTE-Zelle des ersten Typs gemäß den LTE-Netzwerkinformationen Folgendes umfasst:
Bestimmen durch die Teilnehmereinrichtung einer Frequenz in den LTE-Netzwerkinformationen, die zu einem Frequenzband des ersten Typs gehört, Suchen nur nach der Frequenz, die zum Frequenzband des ersten Typs gehört, und Fortsetzen des Messens einer gefundenen LTE-Zelle; und/oder
Bestimmen durch die Teilnehmereinrichtung gemäß den gespeicherten LTE-Netzwerkinformationen einer Frequenz und/oder einer Zellidentität, die in den LTE-Netzwerkinformationen enthalten sind/ist und der LTE-Zelle des ersten Typs entsprechen/entspricht, Suchen nur nach der Frequenz und/oder der Zellidentität, die der LTE-Zelle des ersten Typs entsprechen/entspricht, und Fortsetzen des Messens einer gefundenen LTE-Zelle, wobei die gespeicherten LTE-Netzwerkinformationen einen Netzwerktyp einer LTE-Zelle umfassen, die einer Frequenz und/oder einer Zellidentität entspricht; und/oder
Bestimmen durch die Teilnehmereinrichtung gemäß LTE FDD- oder LTE TDD-Anzeigeinformationen, die vom 2G- oder 3G-Netzwerk geliefert werden, einer Frequenz und/oder einer Zellidentität, die der LTE-Zelle des ersten Typs entsprechen/entspricht, Suchen nur nach der Frequenz und/oder der Zellidentität, die der LTE-Zelle des ersten Typs entsprechen/entspricht, und Fortsetzen des Messens einer gefundenen LTE-Zelle.

5. Verfahren nach Anspruch 3, wobei das Messen (302) durch die Teilnehmereinrichtung nur einer LTE-Zelle des ersten Typs gemäß den LTE-Netzwerkinformationen Folgendes umfasst:
Suchen durch die Teilnehmereinrichtung nach einer LTE-Zelle gemäß den LTE-Netzwerkinformationen;
Bestimmen durch die Teilnehmereinrichtung eines Netzwerktyps jeder gefundenen LTE-Zelle gemäß einer Lage eines primären Synchronisierungssignals und/oder eines sekundären Synchronisierungssignals in einem Frame der LTE-Zelle und Fortsetzen des Messens nur einer LTE-Zelle, deren Netzwerktyp der erste Typ ist; und/oder
Bestimmen durch die Teilnehmereinrichtung eines Netzwerktyps jeder gefundenen LTE-Zelle demgemäß, ob eine Aufwärtsfrequenz und eine Abwärtsfrequenz der LTE-Zelle dieselben sind, und Fortsetzen des Messens nur einer LTE-Zelle, deren Netzwerktyp der erste Typ ist.

6. Verfahren nach Anspruch 1 oder 2, wobei das Messen (202) durch die Teilnehmereinrichtung einer LTE-Zelle gemäß den LTE-Netzwerkinformationen Folgendes umfasst:
Messen (402) durch die Teilnehmereinrichtung einer LTE FDD-Zelle und einer LTE TDD-Zelle gemäß den LTE-Netzwerkinformationen; und
das Auswählen (203) durch die Teilnehmereinrichtung aus einer LTE-Zelle, deren Messergebnis eine voreingestellte Bedingung erfüllt, einer zweiten LTE-Zelle zum Zugreifen auf ein LTE-Netzwerk Folgendes umfasst:
Bestimmen (403) durch die Teilnehmereinrichtung eines Netzwerktyps jeder LTE-Zelle in der LTE-Zelle, deren Messergebnis die voreingestellte Bedingung erfüllt; und
Auswählen (404) durch die Teilnehmereinrichtung in der LTE-Zelle, deren Messergebnis die voreingestellte Bedingung erfüllt, aus einer LTE-Zelle, deren Netzwerktyp der erste Typ ist, der zweiten LTE-Zelle zum Zugreifen auf das LTE-Netzwerk.

7. Verfahren nach Anspruch 6, wobei das Bestimmen (403) durch die Teilnehmereinrichtung eines Netzwerktyps jeder LTE-Zelle in der LTE-Zelle, deren Messergebnis die voreingestellte Bedingung erfüllt, Folgendes umfasst:
Bestimmen durch die Teilnehmereinrichtung demgemäß, ob eine Frequenz jeder LTE-Zelle zu einem LTE FDD-Frequenzband oder einem LTE TDD-Frequenzband gehört, des Netzwerktyps jeder LTE-Zelle in der LTE-Zelle, deren Messergebnis die voreingestellte Bedingung erfüllt; und/oder
Bestimmen durch die Teilnehmereinrichtung gemäß einer Lage eines primären Synchronisierungssignals PSS und/oder eines sekundären Synchronisierungssignals in einem Frame jeder LTE-Zelle des Netzwerktyps jeder LTE-Zelle in der LTE-Zelle, deren Messergebnis die voreingestellte Bedingung erfüllt; und/oder
Bestimmen durch die Teilnehmereinrichtung gemäß den gespeicherten LTE-Netzwerkinformationen des Netzwerktyps jeder LTE-Zelle in der LTE-Zelle, deren Messergebnis die voreingestellte Bedingung erfüllt, wobei die gespeicherten LTE-Netzwerkinformationen einen Netzwerktyp einer LTE-Zelle umfassen; und/oder Bestimmen durch die Teilnehmereinrichtung gemäß LTE FDD- und/oder LTE TDD-Anzeigeinformationen, die vom 2G- oder 3G-Netzwerk geliefert werden, des Netzwerktyps jeder LTE-Zelle in der LTE-Zelle, deren Messergebnis die voreingestellte Bedingung erfüllt; und/oder
Bestimmen durch die Teilnehmereinrichtung demgemäß, ob eine Aufwärtsfrequenz und eine Abwärtsfrequenz jeder LTE-Zelle dieselben sind, des Netzwerktyps jeder LTE-Zelle in der LTE-Zelle, deren Messergebnis die voreingestellte Bedingung erfüllt.

8. Teilnehmereinrichtung, die Folgendes umfasst:
ein Fallbackmodul (501), das dazu ausgelegt ist, von einer LTE-Zelle zurück in ein 2G- oder 3G-Netzwerk zu fallen, um einen leitungsvermittelten ("Circuit Switched", CS-)Dienst auszuführen, wobei ein Netzwerktyp der ersten LTE-Zelle ein erster Typ und der erste Typ ein LTE FDD oder ein LTE TDD ist;
ein Messmodul (502), das dazu ausgelegt ist: wenn die Teilnehmereinrichtung die Ausführung des CS-Dienstes im 2G- oder 3G-Netzwerk abschließt, eine LTE-Zelle gemäß LTE-Netzwerkinformationen zu messen, um ein Messergebnis von jeder LTE-Zelle mindestens des ersten Typs zu erhalten, wobei an einem Rand oder in einem überlappten Abdeckungsbereich eines LTE TDD-Netzwerks und eines LTE FDD-Netzwerks die LTE-Netzwerkinformationen Informationen über eine Zelle eines LTE FDD-Typs und Informationen über eine Zelle eines LTE TDD-Typs umfassen; und
ein Auswahlmodul (503), das dazu ausgelegt ist, aus einer LTE-Zelle, deren Messergebnis eine voreingestellte Bedingung erfüllt, eine zweite LTE-Zelle zum Zugreifen auf ein LTE-Netzwerk auszuwählen, wobei ein Netzwerktyp der zweiten LTE-Zelle der erste Typ ist:
wobei das Messmodul (502) oder das Auswahlmodul (503) ferner dazu ausgelegt ist, einen Netzwerktyp von LTE-Zellen, die zu messen sind, zu bestimmen bzw. LTE-Zellen, deren Messergebnis eine voreingestellte Bedingung erfüllt.

9. Teilnehmereinrichtung nach Anspruch 8, wobei das Messmodul (502) speziell dazu ausgelegt ist: wenn die Teilnehmereinrichtung die Ausführung des CS-Dienstes im 2G- oder 3G-Netzwerk abschließt, nur eine LTE-Zelle des ersten Typs gemäß den LTE-Netzwerkinformationen zu messen, um ein Messergebnis von jeder LTE-Zelle zu erhalten, wobei die LTE-Netzwerkinformationen die Informationen über eine Zelle eines LTE FDD-Typs und die Informationen über eine Zelle eines LTE TDD-Typs umfassen; und
das Auswahlmodul (503) speziell dazu ausgelegt ist, aus einer LTE-Zelle, die vom ersten Typ ist und deren Messergebnis die voreingestellte Bedingung erfüllt, die zweite LTE-Zelle zum Zugreifen auf das LTE-Netzwerk auszuwählen, wobei der Netzwerktyp der zweiten LTE-Zelle der erste Typ ist.

10. Teilnehmereinrichtung nach Anspruch 9, wobei das Messmodul (502) speziell Folgendes umfasst:
eine erste Sucheinheit (601), die dazu ausgelegt ist: wenn die Teilnehmereinrichtung die Ausführung des CS-Dienstes im 2G- oder 3G-Netzwerk abschließt, eine Frequenz zu bestimmen, die zu einem Frequenzband des ersten Typs in den LTE-Netzwerkinformationen gehört, und nur nach der Frequenz zu suchen, die zum Frequenzband des ersten Typs gehört; und/oder gemäß gespeicherten LTE-Netzwerkinformationen eine Frequenz und/oder eine Zellidentität zu bestimmen, die in den LTE-Netzwerkinformationen enthalten sind/ist und der LTE-Zelle des ersten Typs entsprechen/entspricht, und nur nach der Frequenz und/oder der Zellidentität zu suchen, die der LTE-Zelle des ersten Typs entsprechen/entspricht; und/oder gemäß LTE FDD- oder LTE TDD-Anzeigeinformationen, die vom 2G- oder 3G-Netzwerk geliefert werden, eine Frequenz und/oder eine Zellidentität zu bestimmen, die der LTE-Zelle des ersten Typs entsprechen/entspricht, und nur nach der Frequenz und/oder der Zellidentität zu suchen, die der LTE-Zelle des ersten Typs entsprechen/entspricht; und
eine erste Messeinheit (602), die dazu ausgelegt ist, das Messen einer LTE-Zelle, die von der ersten Sucheinheit (601) gefunden wurde, fortzusetzen, um ein Messergebnis der LTE-Zelle zu erhalten.

11. Teilnehmereinrichtung nach Anspruch 9, wobei das Messmodul (502) speziell Folgendes umfasst:
eine zweite Sucheinheit (701), die dazu ausgelegt ist, gemäß den LTE-Netzwerkinformationen nach einer LTE-Zelle zu suchen; und
eine zweite Messeinheit (702), die dazu ausgelegt ist: gemäß einer Lage eines primären Synchronisierungssignals und/oder eines sekundären Synchronisierungssignals in einem Frame der LTE-Zelle, die von der zweiten Sucheinheit (701) gefunden wurde, und/oder demgemäß, ob eine Aufwärtsfrequenz und eine Abwärtsfrequenz jeder von der zweiten Sucheinheit (701) gefundenen LTE-Zelle dieselben sind, einen Netzwerktyp jeder gefundenen LTE-Zelle zu bestimmen; und das Messen nur einer LTE-Zelle fortzusetzen, deren Netzwerktyp der erste Typ ist.

12. Teilnehmereinrichtung nach Anspruch 8, wobei das Messmodul (502) speziell dazu ausgelegt ist: wenn die Teilnehmereinrichtung die Ausführung des CS-Dienstes im 2G- oder 3G-Netzwerk abschließt, eine LTE FDD-Zelle und eine LTE TDD-Zelle gemäß den LTE-Netzwerkinformationen zu messen, um ein Messergebnis von jeder LTE-Zelle zu erhalten, wobei die LTE-Netzwerkinformationen die Informationen über eine Zelle eines LTE FDD-Typs und die Informationen über eine Zelle eines LTE TDD-Typs umfassen; und
das Auswahlmodul (503) speziell Folgendes umfasst:
eine Bestimmungseinheit (801), die dazu ausgelegt ist, einen Netzwerktyp jeder LTE-Zelle in der LTE-Zelle zu bestimmen, deren Messergebnis die voreingestellte Bedingung erfüllt; und
eine Auswahleinheit (802), die dazu ausgelegt ist, in der LTE-Zelle, deren Messergebnis die voreingestellte Bedingung erfüllt, aus einer LTE-Zelle, deren Netzwerktyp der erste Typ ist, die zweite LTE-Zelle zum Zugreifen auf das LTE-Netzwerk auszuwählen.

13. Teilnehmereinrichtung nach Anspruch 12, wobei die Bestimmungseinheit (802) speziell dazu ausgelegt ist: demgemäß, ob eine Frequenz jeder LTE-Zelle zu einem LTE FDD-Frequenzband oder einem LTE TDD-Frequenzband gehört, und/oder gemäß einer Lage eines primären Synchronisierungssignals PSS und/oder eines sekundären Synchronisierungssignals in einem Frame jeder LTE-Zelle und/oder gemäß gespeicherten LTE-Netzwerkinformationen und/oder gemäß LTE FDD- und/oder LTE TDD-Anzeigeinformationen, die vom 2G- oder 3G-Netzwerk geliefert werden, und/oder demgemäß, ob eine Aufwärtsfrequenz und eine Abwärtsfrequenz jeder LTE-Zelle dieselben sind, einen Netzwerktyp jeder LTE-Zelle in der LTE-Zelle zu bestimmen, deren Messergebnis die voreingestellte Bedingung erfüllt, wobei die gespeicherten LTE-Netzwerkinformationen einen Netzwerktyp einer LTE-Zelle umfassen.

## Revendications

1. Procédé de sélection de réseau comprenant :
le retour (201, 301, 401), par un équipement utilisateur, à partir d'une première cellule de réseau d'évolution à long terme, LTE, vers un réseau du système de communications mobiles de deuxième génération, 2G, ou vers un réseau du système de communications mobiles de troisième génération, 3G, afin d'exécuter un service à commutation de circuits, CS, dans lequel un type de réseau de la première cellule LTE est un premier type et le premier type est un duplex à répartition de fréquence du réseau LTE, FDD, ou un duplex par répartition dans le temps du réseau LTE, TDD,
la mesure (202), par l'équipement utilisateur, lorsque l'équipement utilisateur a achevé l'exécution du service à commutation CS sur le réseau 2G ou 3G, d'une cellule LTE en fonction d'informations de réseau LTE pour obtenir un résultat de mesure sur chaque cellule LTE d'au moins le premier type, dans lequel, à la périphérie ou dans une zone de couverture en chevauchement d'un réseau duplex LTE TDD et d'un réseau duplex LTE FDD, les informations de réseau LTE comprennent des informations concernant une cellule de type duplex LTE FDD et des informations concernant une cellule de type duplex LTE TDD, et
la sélection (203), par l'équipement utilisateur à partir d'une cellule LTE dont le résultat de mesure satisfait à une condition prédéfinie, une seconde cellule LTE permettant d'accéder à un réseau LTE, le type de réseau de la seconde cellule LTE étant le premier type :
dans lequel, lors de l'étape de mesure ou de sélection, est respectivement déterminé le type de réseau de cellules LTE à mesurer ou de cellules LTE dont le résultat de mesure satisfait à une condition prédéfinie.

2. Procédé selon la revendication 1, dans lequel les informations de réseau LTE sont des informations de réseau LTE procurées par un dispositif d'accès au réseau sur le réseau 2G ou 3G, ou bien les informations de réseau LTE stockées dans l'équipement utilisateur ou encore toutes les fréquences de réseau LTE prises en charge par l'équipement utilisateur.

3. Procédé selon la revendication 1 ou la revendication 2, dans lequel la mesure (202), par l'équipement utilisateur, d'une cellule LTE en fonction des informations de réseau LTE comprend :
la mesure (302), par l'équipement utilisateur, uniquement d'une cellule LTE du premier type en fonction des informations de réseau LTE, et
la sélection (203), par l'équipement utilisateur, à partir d'une cellule LTE dont le résultat de mesure satisfait à une condition prédéfinie, d'une seconde cellule LTE permettant d'accéder à un réseau LTE comprend :
la sélection (303), par l'équipement utilisateur, à partir d'une cellule LTE qui est du premier type et dont le résultat de mesure satisfait à la condition prédéfinie, de la seconde cellule LTE permettant d'accéder au réseau LTE.

4. Procédé selon la revendication 3, dans lequel la mesure (302), par l'équipement utilisateur, uniquement d'une cellule LTE du premier type en fonction des informations de réseau LTE comprend :
la détermination, par l'équipement utilisateur, d'une fréquence appartenant à une bande de fréquences du premier type dans les informations de réseau LTE, la recherche uniquement de la fréquence appartenant à la bande de fréquences du premier type et la poursuite de la mesure d'une cellule LTE trouvée, et/ou
la détermination, par l'équipement utilisateur, en fonction des informations stockées de réseau LTE, d'une fréquence et/ou d'une identité de cellule qui sont dans les informations de réseau LTE et qui correspondent à la cellule LTE du premier type, la recherche uniquement de la fréquence et/ou de l'identité de cellule qui correspondent à la cellule LTE du premier type et la poursuite de la mesure d'une cellule LTE trouvée,
les informations stockées de réseau LTE comprenant un type de réseau d'une cellule LTE qui correspond à une fréquence et/ou à une identité de cellule, et/ou
la détermination, par l'équipement utilisateur, en fonction des informations d'indication de duplex LTE FDD ou de duplex LTE TDD délivrées par le réseau 2G ou 3G, d'une fréquence et/ou d'une identité de cellule qui correspondent à la cellule LTE du premier type, la recherche uniquement de la fréquence et/ou de l'identité de cellule qui correspondent à la cellule LTE du premier type et la poursuite de la mesure d'une cellule LTE trouvée.

5. Procédé selon la revendication 3, dans lequel la mesure (302), par l'équipement utilisateur, uniquement d'une cellule LTE du premier type en fonction des informations de réseau LTE comprend :
la recherche, par l'équipement utilisateur, d'une cellule LTE en fonction des informations de réseau LTE,
la détermination, par l'équipement utilisateur, d'un type de réseau de chaque cellule LTE trouvée en fonction d'un ou plusieurs emplacements positions d'un signal de synchronisation primaire et/ou d'un signal de synchronisation secondaire dans une trame de la cellule LTE et la poursuite de la mesure uniquement d'une cellule LTE dont le type de réseau est le premier type, et/ou
la détermination, par l'équipement utilisateur, d'un type de réseau de chaque cellule LTE trouvée selon qu'une fréquence de liaison montante et une fréquence de liaison descendante de la cellule LTE sont identiques ou non et la poursuite de la mesure uniquement d'une cellule LTE dont le type de réseau est le premier type.

6. Procédé selon la revendication 1 ou la revendication 2, dans lequel la mesure (202), par l'équipement utilisateur, d'une cellule LTE en fonction des informations de réseau LTE comprend :
la mesure (402), par l'équipement utilisateur, d'une cellule de type duplex LTE FDD et d'une cellule de type duplex LTE TDD en fonction des informations de réseau LTE, et
la sélection (203), par l'équipement utilisateur, à partir d'une cellule LTE dont le résultat de mesure satisfait à une condition prédéfinie, d'une seconde cellule LTE permettant d'accéder à un réseau LTE comprend :
la détermination (403) par l'équipement utilisateur du type de réseau de chaque cellule LTE dans la cellule LTE dont le résultat de mesure satisfait à condition prédéfinie, et la sélection (404), par l'équipement utilisateur, à partir d'une cellule LTE dont le type de réseau est le premier type dans la cellule LTE dont le résultat de mesure satisfait à condition prédéfinie, de la seconde cellule LTE permettant d'accéder au réseau LTE.

7. Procédé selon la revendication 6, dans lequel la détermination (403), par l'équipement utilisateur, du type de réseau de chaque cellule LTE dans la cellule LTE dont le résultat de mesure satisfait à la condition prédéfinie comprend :
la détermination, par l'équipement utilisateur, selon qu'une fréquence de chaque cellule LTE appartient ou non à une bande de fréquences de duplex LTE FDD ou à une bande de fréquences de duplex LTE TDD, du type de réseau de chaque cellule LTE dans la cellule LTE dont le résultat de mesure satisfait à la condition prédéfinie, et/ou
la détermination, par l'équipement utilisateur, en fonction d'un ou plusieurs emplacements d'un signal de synchronisation primaire PSS et/d'un signal de synchronisation secondaire dans une trame de chaque cellule LTE, du type de réseau de chaque cellule LTE dans la cellule LTE dont le résultat de mesure satisfait à la condition prédéfinie, et/ou
la détermination, par l'équipement utilisateur, en fonction des informations stockées de réseau LTE, du type de réseau de chaque cellule LTE dans la cellule LTE dont le résultat de mesure satisfait à la condition prédéfinie, des informations stockées de réseau LTE comprenant un type de réseau d'une cellule LTE, et/ou la détermination, par l'équipement utilisateur, en fonction d'informations d'indication de duplex LTE FDD et/ou de duplex LTE TDD délivrées par le réseau 2G ou 3G, du type de réseau de chaque cellule LTE dans la cellule LTE dont le résultat de mesure satisfait à la condition prédéfinie, et/ou
la détermination, par l'équipement utilisateur selon qu'une fréquence de liaison montante et une fréquence de liaison descendante de chaque cellule LTE sont identiques ou non, du type de réseau de chaque cellule LTE dans la cellule LTE dont le résultat de mesure satisfait à la condition prédéfinie.

8. Équipement utilisateur comprenant :
un module de secours (501) configuré pour retourner à partir d'une cellule LTE, vers un réseau 2G, ou vers un réseau 3G, afin d'exécuter un service à commutation de circuits, CS, dans lequel le type de réseau de la première cellule LTE est un premier type et le premier type est un duplex LTE FDD, ou un duplex LTE TDD,
un module de mesure (502) configuré, lorsque l'équipement utilisateur a achevé l'exécution du service à commutation CS sur le réseau 2G ou 3G, pour mesurer une cellule LTE en fonction d'informations de réseau LTE pour obtenir un résultat de mesure sur chaque cellule LTE d'au moins le premier type, dans lequel, à la périphérie ou dans une zone de couverture en chevauchement d'un réseau duplex LTE TDD et d'un réseau duplex LTE FDD, les informations de réseau LTE comprennent des informations concernant une cellule de type duplex LTE FDD et des informations concernant une cellule de type duplex LTE TDD, et
un module de sélection (503) configuré pour sélectionner, à partir d'une cellule LTE dont le résultat de mesure satisfait à une condition prédéfinie, une seconde cellule LTE permettant d'accéder à un réseau LTE, le type de réseau de la seconde cellule LTE étant le premier type :
dans lequel le module de mesure (502) ou le module de sélection (503) est en outre configuré pour déterminer respectivement un type de réseau de cellules LTE à mesurer ou de cellules LTE dont le résultat de mesure satisfait à une condition prédéfinie.

9. Équipement utilisateur selon la revendication 8, dans lequel le module de mesure (502) est en particulier configuré, lorsque l'équipement utilisateur a achevé l'exécution du service à commutation CS sur le réseau 2G ou 3G, pour mesurer uniquement une cellule LTE du premier type en fonction des informations de réseau LTE, pour obtenir un résultat de mesure de chaque cellule LTE, les informations de réseau LTE comprenant les informations concernant une cellule de type duplex LTE FDD et les informations concernant une cellule de type duplex LTE TDD, et
le module de sélection (503) est en particulier configuré pour sélectionner, à partir d'une cellule LTE qui est du premier type et dont le résultat de mesure satisfait à la condition prédéfinie, la seconde cellule LTE permettant d'accéder au réseau LTE, le type de réseau de la seconde cellule LTE étant le premier type.

10. Équipement utilisateur selon la revendication 9, dans lequel le module de mesure (502) comprend en particulier :
une première unité de recherche (601) configurée, lorsque l'équipement utilisateur a achevé l'exécution du service à commutation CS sur le réseau 2G ou 3G, pour déterminer une fréquence appartenant à une bande de fréquences du premier type dans les informations de réseau LTE et pour rechercher uniquement la fréquence appartenant à la bande de fréquences du premier type ; et/ou pour déterminer, en fonction des informations stockées de réseau LTE, une fréquence et/ou une identité de cellule qui se trouvent dans les informations de réseau LTE et qui correspondent à la cellule LTE du premier type, et pour rechercher uniquement la fréquence et/ou l'identité de cellule qui correspondent à la cellule LTE du premier type ; et/ou pour déterminer, en fonction d'informations d'indication de duplex LTE FDD ou de duplex LTE TDD délivrées par le réseau 2G ou 3G, une fréquence et/ou une identité de cellule qui correspondent à la cellule LTE du premier type, et pour rechercher uniquement la fréquence et/ou l'identité de cellule qui correspondent à la cellule LTE du premier type, et
une première unité de mesure (602) configurée pour poursuivre la mesure d'une cellule LTE trouvée par la première unité de recherche (601) pour obtenir le résultat de mesure de chaque cellule LTE.

11. Équipement utilisateur selon la revendication 9, dans lequel le module de mesure (502) comprend en particulier :
une seconde unité de recherche (701) configurée pour rechercher une cellule LTE en fonction des informations de réseau LTE, et
une seconde unité de mesure (702) configurée pour déterminer le type de réseau de chaque cellule LTE trouvée en fonction d'un ou plusieurs emplacements d'un signal de synchronisation primaire et/ou d'un signal de synchronisation secondaire dans une trame de la cellule LTE trouvée par la seconde unité de recherche (701), et/ou selon qu'une fréquence de liaison montante et une fréquence de liaison descendante de chaque cellule LTE trouvée par la seconde unité de recherche (701) sont identiques ou non ; et pour poursuivre la mesure uniquement d'une cellule LTE dont le type de réseau est le premier type.

12. Équipement utilisateur selon la revendication 8, dans lequel le module de mesure (502) est en particulier configuré, lorsque l'équipement utilisateur a achevé l'exécution du service à commutation CS sur le réseau 2G ou 3G, pour mesurer une cellule de type duplex LTE FDD et une cellule de type duplex LTE TDD en fonction des informations de réseau LTE, pour obtenir un résultat de mesure de chaque cellule LTE, les informations de réseau LTE comprenant les informations concernant une cellule de type duplex LTE FDD et les informations concernant une cellule de type duplex LTE TDD, et
le module de sélection (503) comprend en particulier :
une unité de détermination (801) configurée pour déterminer le type de réseau de chaque cellule LTE dans la cellule LTE dont le résultat de mesure satisfait à la condition prédéfinie, et
une unité de sélection (802) configurée pour sélectionner à partir d'une cellule LTE dont le type de réseau est le premier type dans la cellule LTE dont le résultat de mesure satisfait à la condition prédéfinie, la seconde cellule LTE permettant d'accéder au réseau LTE.

13. Équipement utilisateur selon la revendication 12, dans lequel l'unité de détermination (802) est en particulier configurée pour déterminer le type de réseau de chaque cellule LTE dans la cellule LTE dont le résultat de mesure satisfait à la condition prédéfinie, selon que la fréquence de chaque cellule LTE appartient ou non à une bande de fréquences de duplex LTE FDD ou à une bande de fréquences de duplex LTE TDD, et/ou en fonction d'un ou plusieurs emplacements d'un signal de synchronisation primaire PSS et/ou d'un signal de synchronisation secondaire dans une trame de chaque cellule LTE, et/ou en fonction des informations stockées de réseau LTE, et/ou en fonction d'informations d'indication de duplex LTE FDD et/ou de duplex LTE TDD délivrées par le réseau 2G ou 3G, et/ou selon qu'une fréquence de liaison montante et une fréquence de liaison descendante de chaque cellule LTE sont identiques ou non, les informations stockées de réseau LTE comprenant un type de réseau d'une cellule LTE.
